(19) Europäisches Patentamt
European Patent Office
Office européen des brevets

(11) **EP 2 371 892 A1**

(12) **EUROPEAN PATENT APPLICATION**
published in accordance with Art. 153(4) EPC

(43) Date of publication:
**05.10.2011 Bulletin 2011/40**

(51) Int Cl.:
*C08L 1/02* [(2006.01)]   *B32B 5/02* [(2006.01)]
*C08J 5/18* [(2006.01)]   *C08J 7/04* [(2006.01)]
*C08K 5/04* [(2006.01)]   *C08K 5/16* [(2006.01)]
*C09D 5/00* [(2006.01)]   *C09D 101/00* [(2006.01)]
*D21H 11/16* [(2006.01)]

(21) Application number: **09835121.6**

(22) Date of filing: **25.12.2009**

(86) International application number:
**PCT/JP2009/071889**

(87) International publication number:
**WO 2010/074340 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.12.2008   JP 2008334373**
          **26.12.2008   JP 2008334371**
          **06.02.2009   JP 2009026354**
          **24.12.2009   JP 2009291855**
          **24.12.2009   JP 2009291852**
          **24.12.2009   JP 2009291853**
          **24.12.2009   JP 2009291854**

(71) Applicant: **Kao Corporation**
     **Chuo-ku**
     **Tokyo 103-8210 (JP)**

(72) Inventors:
  • **MUKAI, Kenta**
    **Haga-gun**
    **Tochigi 321-3497 (JP)**
  • **KUMAMOTO, Yoshiaki**
    **Haga-gun**
    **Tochigi 321-3497 (JP)**
  • **ISOGAI, Akira**
    **Tokyo 113-8654 (JP)**
  • **MEIWA, Zenbei**
    **Wakayama-shi**
    **Wakayama 640-8580 (JP)**
  • **MAEZAWA, Takahiro**
    **Haga-gun**
    **Tochigi 321-3497 (JP)**
  • **UGAJIN, Toru**
    **Haga-gun**
    **Tochigi 321-3497 (JP)**

(74) Representative: **HOFFMANN EITLE**
     **Patent- und Rechtsanwälte**
     **Arabellastraße 4**
     **81925 München (DE)**

(54) **GAS-BARRIER MATERIAL, GAS-BARRIER MOLDED ARTICLE, AND METHOD FOR PRODUCING THE GAS-BARRIER MOLDED ARTICLE**

(57)    The present invention provides the gas barrier molded article having high permeation barrier properties against oxygen gas, water vapor and the like. A gas barrier material containing cellulose fibers having an average fiber diameter of not more than 200 nm wherein the content of carboxyl group in a cellulose ranges from 0.1 to 2 mmol/g; and further a cross-linking agent having a reactive functional group or the cellulose fibers being dried or heated or a gas barrier molded article containing a molded substrate and a layer composed of the gas barrier material on the surface of the molded substrate.

EP 2 371 892 A1

**Description**

Field of the invention

The present invention relates to a gas barrier material for producing a film and the like that can control permeation of various gases such as water vapor, oxygen, carbon dioxide, and nitrogen, a gas barrier molded article using the same, and a method for producing the gas barrier molded article.

Background of the invention

Current materials for gas barrier, such as for shielding oxygen and water vapor, are produced mainly from fossil resources. These are thus non-biodegradable, and have to be incinerated after use. Therefore, materials for oxygen barrier that are biodegradable and produced from reproducible biomass have been studied.

Current gas barrier material, such as for shielding oxygen and water vapor, are produced mainly from fossil resources. These are thus non-biodegradable, and have to be incinerated after use. Therefore, materials for oxygen barrier that are biodegradable and produced from reproducible biomass have been studied.

JP-A 2002-348522 and JP-A 2008-1728 disclose a coating agent containing fine cellulose produced by oxidizing cellulose fibers.

JP-A 2002-348522 relates to a coating agent containing microcrystalline cellulose and a layered material produced by applying the coating agent on a substrate. The patent describes that a microcrystalline cellulose powder as a raw material preferably has an average particle diameter of 100 $\mu$m or less, and that cellulose powders having average particle diameters of 3 $\mu$m and 100 $\mu$m were used in Examples. The patent further describes a layered material produced by applying and drying the coating agent (e.g., Claims 15 and 16, and Example 1). In Example 1, a coating film was produced by drying for 10 minutes at 100˚C.

JP-A 2008-1728 relates to fine cellulose fibers. The patent describes a possible use of the fiber as a coating material.

The patent further describes that the fine cellulose fibers are hydrophilic.

Bio MACROMOLECULES Volume 7, Number 6, 2006, June, published by the American Chemical Society, does not at all describe gas barrier properties such as oxygen barrier.

JP-A-2002-348522 further describes that a coating material containing an additive can produce a film having increased moisture resistant properties. However, the patent discloses only a process of adding the additive to a coating liquid and then applying the liquid to a substrate.

JP-A 2008-1728 relates to fine cellulose fibers. The patent describes a possible use of the fiber as a coating material.

JP-A 2009-057552 describes a gas barrier molded composite containing a molded substrate and a layer of a gas barrier material containing cellulose fibers having an average fiber diameter of not more than 200 nm, in which the content of carboxyl groups in cellulose composing the cellulose fibers is 0.1 to 2 mmol/g. In Example 2 (paragraph 0073), a gas barrier molded composite is prepared by applying a gas barrier material on a sheet of substrate (PET) and drying for 120 minutes at 23˚C.

Summary of the invention

The present invention provides the followings.

1. A gas barrier material, including: cellulose fibers having an average fiber diameter of not more than 200 nm wherein the content of carboxyl group in a cellulose ranges from 0.1 to 2 mmol/g; and further a cross-linking agent having a reactive functional group or the cellulose fibers being dried or heated.
2. A gas barrier molded article including a molded substrate and a layer composed of the gas barrier material according to 1 on the surface of the molded substrate.
A3. The gas barrier material, containing the cellulose fibers having an average fiber diameter of not more than 200 nm and the cross-linking agent having a reactive functional group, wherein the content of carboxyl groups in the cellulose composing the cellulose fiber is 0.1 to 2 mmol/g.
A4. A gas barrier molded article formed from the gas barrier material according to A3.
A5. A method for producing the gas barrier molded article according to A4, including steps of supplying the gas barrier material containing the cellulose fibers and the cross-linking agent having a reactive functional group on a hard surface for forming or a molded substrate to attach the gas barrier material on the hard surface or the molded substrate and then drying it.
B6. A method for producing a film including steps of forming a film material of a suspension containing cellulose fibers and then drying it with heat, wherein the cellulose fibers have an average fiber diameter of not more than 200 nm, and the content of carboxyl group in the cellulose composing the cellulose fibers is 0.1 to 2 mmol/g.

C7. A method for producing a film including steps of forming a film material of a suspension containing cellulose fibers on a base plate or a substrate, attaching an aqueous solution of a cross-linking agent having a reactive functional group on the film material, and then cross-linking it, wherein the cellulose fibers have an average fiber diameter of not more than 200 nm, and the content of carboxyl group in the cellulose composing the cellulose fibers is 0.1 to 2 mmol/g.

C8. A method for producing a film including steps of forming a film material of a suspension containing cellulose fibers on a base plate or a substrate, then drying it, attaching an aqueous solution of a cross-linking agent having a reactive functional group on the dried film material, and then cross-linking it, wherein the cellulose fibers have an average fiber diameter of not more than 200 nm and the content of carboxyl group in the cellulose composing the cellulose fibers is 0.1 to 2 mmol/g.

9. A method for producing any one of a gas barrier molded article, a film and a gas barrier laminate by any one of methods A5, B6, C7 and C8.

The gas barrier material of the present invention is hereinafter also referred to as film.

In the present invention, the surface of a molded substrate is also referred to as a base plate, a substrate, a hard surface for molding or a molded substrate.

Detailed Description of the Invention

In JP-A 2002-348522, there is no description about the pulverizing treatment of fibers described in the present invention. The patent has room for improvement in compactness, film strength, and adhesion to the substrate of the coating agent layer applied. In addition, a test method and a basis for evaluation for adhesion to the substrate of the coating agent layer are unclear, and specified effects cannot be confirmed.

In JP-A 2008-1728, there is no description about an application with specified effects of fine cellulose fibers as a coating material.

For fine cellulose fibers of JP-A 2008-1728, a coating film produced using the fibers as a coating material can decrease gas barrier properties and film strength under high humidity atmosphere.

In JP-A 2008-1728, there is no description about an application with specified effects of the fine cellulose fibers as a coating material, no description about introduction of moisture resistance, or no description about addition of an agent for moisture resistance.

JP-A 2009-057552 produces a gas barrier molded composite having high gas barrier properties, but also has room for improvement in adhesion strength of the substrate and the gas barrier material layer.

The present invention is excellent particularly in oxygen barrier properties or water vapor properties. According to the present invention, a film or the like having good water vapor barrier properties and also oxygen barrier properties can be provided.

The present invention provides the method for producing a film having high oxygen barrier properties even in high humidity atmosphere and being suitably used as an oxygen barrier film and then the film produced by the method.

The present invention also provides the method for producing a gas barrier laminate having increased adhesion strength between a substrate and a gas barrier layer.

As used herein, the "gas barrier" refers a function of shielding various gases such as oxygen, nitrogen, carbon dioxide, organic vapor, and water vapor, and/or aroma substances such as limonene and menthol.

The gas barrier material in the present invention may be intended to increase barrier properties against all of the above shown gases, or against only a certain gas. For example, a gas barrier material having decreased oxygen barrier properties but increased water vapor barrier properties selectively prevents permeation of water vapor, which is also included in the present invention. A gas to which a gas barrier material has increased barrier properties is appropriately selected according to an intended use.

The present invention also provides the gas barrier material, that is excellent in either or both water vapor barrier and oxygen barrier properties under humidity environment and used for producing a gas barrier molded article such as a film.

The film produced by the method of the present invention can be used as an oxygen barrier film having high oxygen barrier properties even under high humidity atmosphere.

The gas barrier laminate produced by the method of the present invention has high gas barrier properties and drastically increased adhesion strength between the substrate and the gas barrier layer.

The gas barrier laminate produced by the method of the present invention can be used in various packaging materials that are required to have gas barrier properties.

The present invention includes the following embodiments.

The gas barrier material according to A3, wherein the cellulose fibers having an average fiber diameter of not more than 200 nm have an average aspect ratio of 10 to 1,000.

The gas barrier material according to A3, wherein the cross-linking agent having a reactive functional group is a compound having at least two functional groups each selected from an epoxy, an aldehyde, an amino, a carboxyl, an isocyanate, a hydrazide, an oxazolyl, a carbodiimide, an azetidinium, an alkoxide, a methylol, a silanol, and a hydroxy groups.

The gas barrier material according to A3, wherein the cross-linking agent having a reactive functional group has a molecular weight of not more than 500.

The gas barrier material according to A3, wherein the cross-linking agent having a reactive functional group is a compound having a molecular weight of not more than 500 and at least two groups selected from an aldehyde group and a carboxyl group.

The gas barrier material according to A3, wherein the cross-linking agent having a reactive functional group is at least one compound selected from glyoxal, glutaraldehyde, and citric acid.

A gas barrier molded article (A4), containing a molded substrate and a layer composed of the gas barrier material according to A3 on the surface of the molded substrate.

The method for producing the gas barrier molded article according to A4, including steps of: supplying and attaching a gas barrier material containing cellulose fibers and a cross-linking agent having a reactive functional group to a hard surface for forming or a molded substrate, and then drying it (A5).

The method according to A5, which is the method for producing a gas barrier molded article according to A5, further including: heating the gas barrier molded article after the step of drying.

The gas barrier material according to A3 containing the cross-linking agent having a reactive functional group, wherein the cellulose fibers are dried or heated.

A method for producing a film, including steps of forming a film material of a suspension containing cellulose fibers, and then drying it with heat, wherein the cellulose fibers have an average fiber diameter of not more than 200 nm and the content of carboxyl groups in the cellulose composing the cellulose fibers of 0.1 to 2 mmol/g (B6).

The method for producing a film according to B6, wherein, in the step of heat-drying, the film is dried so that the water content of the film may be 1 to 90% of the equilibrium water content at 23°C and 60%RH.

The method for producing a film according to B6, wherein the heating temperature in the step of drying with heat is 50 to 250°C.

The method for producing a film according to B6, further including step of holding the film material in a state dried to the equilibrium water content at a temperature of 20°C±15°C and a humidity of 45 to 85%RH between steps of forming the film material of the suspension of the cellulose fibers and drying it with heat.

The method according to B6, further including step of: adding a cross-linking agent.

A method for producing a film, including steps of:

   forming a film material of a suspension containing cellulose fibers on a base plate or a substrate,
   attaching an aqueous solution of a cross-linking agent having a reactive functional group on the film material, and then cross-linking it,

wherein the cellulose fibers have an average fiber diameter of not more than 200 nm and the content of carboxyl groups in the cellulose composing the cellulose fibers of 0.1 to 2 mmol/g (C7).

A method for producing a film, including steps of:

   forming a film material of a suspension containing cellulose fibers on a base plate or a substrate,
   then drying,
   attaching an aqueous solution of a cross-linking agent having a reactive functional group on the dried film material, and then
   cross-linking,

wherein the cellulose fibers have an average fiber diameter of not more than 200 nm and the content of carboxyl groups in the cellulose composing the cellulose fibers of 0.1. to 2 mmol/g (C8).

The method for producing a film according to C7 or C8, wherein a concentration of the aqueous solution of the cross-linking agent in the step of attaching the aqueous solution is 1 to 30% by mass.

The for producing a film according to C7 or C8, wherein the cross-linking reaction is performed by heating at 30 to 300°C for 1 to 300 minutes.

The method for producing a film according to C7 or C8, wherein the cross-linking agent having a reactive functional group is a compound having at least two functional groups selected from an epoxy group, an aldehyde group, an amino group, a carboxyl group, an isocyanate group, a hydrazide group, an oxazolyl group, a carbodiimide group, an azetidinium group, an alkoxide group, a methylol group, a silanol group and a hydroxy group.

The method for producing a film according to C7 or C8, wherein the cross-linking agent having a reactive functional group has a molecular weight of not more than 500.

The method for producing a film according to C7 or C8, wherein the cross-linking agent having a reactive functional group is a compound having a molecular weight of not more than 500 and at least two groups selected from an aldehyde group, a carboxyl group and a hydrazide group.

The method for producing a film according to C7 or C8, wherein the cross-linking agent is a compound selected from adipic acid dihydrazide, glyoxal, butanetetracarboxylic acid, glutaraldehyde, and citric acid.

Below, A3, A4, and A5 of the present invention will be described in detail.

<Gas barrier material>

The gas barrier material of the present invention contains the specified cellulose fibers and a cross-linking agent having a reactive functional group.

1) Cellulose fibers

The cellulose fibers used in the present invention have an average fiber diameter of not more than 200 nm, preferably 1 to 200 nm, more preferably 1 to 100 nm, and even more preferably 1 to 50 nm. The average fiber diameter can be measured by the method described in Examples.

From the viewpoint of achieving high gas barrier properties, the content of carboxyl groups in the cellulose composing the cellulose fibers used in the present invention is 0.1 to 2 mmol/g, preferably 0.4 to 2 mmol/g, more preferably 0.6 to 1.8 mmol/g, and even more preferably 0.6 to 1.6 mmol/g. The content of carboxyl groups can be measured by the method described in Examples. Cellulose fibers having the content of carboxyl groups of less than 0.1 mmol/g cannot produce fine cellulose fibers having an average fiber diameter of not more than 200 nm by the pulverizing treatment of fibers described below.

In the cellulose fibers used in the present invention, the content of carboxyl groups in the cellulose composing the cellulose fibers is within the range described above. Depending on conditions such as oxidizing treatment in a practical production process, cellulose fibers being out of the above specified ranges of the content of carboxyl groups may be contained in the produced cellulose fibers as impurities after the oxidizing treatment.

The cellulose fibers used in the present invention have an average aspect ratio of 10 to 1,000, more preferably of 10 to 500, and even more preferably of 100 to 350. The average aspect ratio can be measured by the method described in Examples.

The cellulose fibers used in the present invention can be produced, for example, by the following method. First, to natural fibers as a raw material is added about 10 to 1000 times amount by mass (based on dry mass) of water, and the mixture is processed with a mixer or the like to provide a slurry.

Examples of the natural fiber that can be used as raw material include wood pulps, nonwood pulps, cotton, and bacterial celluloses.

Then, the natural fibers are subjected to an oxidizing treatment with 2,2,6,6-tetramethyl-1-piperidine-N-oxyl (TEMPO) as a catalyst. Other catalysts can also be used, including derivatives of TEMPO such as 4-acetamide-TEMPO, 4-carboxy-TEMPO, and 4-phosphonoxy-TEMPO.

An amount of TEMPO used is within the range from 0.1 to 10% by mass to the natural fibers used as the raw material (based on dry mass).

In the oxidizing treatment, an oxidant such as sodium hypochlorite and a co-oxidant such as bromides such as sodium bromide are used together with TEMPO.

Examples of the oxidant that can be used include hypohalous acids and salts thereof, halous acids and salts thereof, perhalic acids and salts thereof, hydrogen peroxide, and organic peracids. Preferred are alkaline metal hypohalites such as sodium hypochlorite and sodium hypobromite. An amount of the oxidant used is within the range from about 1 to 100% by mass to the natural fibers used as the raw material (based on dry mass).

For the cooxidant, alkaline metal bromides such as sodium bromide are preferably used. An amount of the cooxidant used is within the range from about 1 to 30% by mass to the natural fibers used as the raw material (based on dry mass).

A pH of the slurry is preferably kept within the range from 9 to 12 for effectively progressing oxidation.

A temperature of the oxidizing treatment (temperature of the slurry) is arbitrarily set in the range from 1 to 50°C. The oxidizing treatment can progress at room temperature and does not require specified temperature control. A time of the oxidizing treatment is desirably 1 to 240 minutes.

After the oxidizing treatment, the catalyst used and the like are removed by washing with water or the like. In this stage, the treated fibers are not pulverized, and can be purified by repetitive washing with water and filtering. An oxidized cellulose can be prepared in the form of fiber or powder, which is dried according to need.

Then, the oxidized cellulose is dispersed in a medium such as water, and pulverized. The pulverization may be controlled to have desired fiber width and length with a defibrator, a beater, a low-pressure homogenizer, a high-pressure homogenizer, a grinder, a cutter mill, a ball mill, a jet mill, a single screw extruder, a twin screw extruder, an ultrasonic agitator, or a home juicer-mixer. In this step, a solid content of the dispersion is preferably 50% or less by mass. The dispersion having higher solid content than 50% by mass requires high energy for dispersing, which is unfavorable.

Such a pulverizing treatment produces cellulose fibers having an average fiber diameter of not more than 200 nm, and further having an average aspect ratio of 10 to 1,000, more preferably 10 to 500, and even more preferably 100 to 350.

Then, the treated cellulose fibers can be obtained in the form of a suspension having an adjusted solid content or in the form of a dried powder (powdery aggregates of cellulose fibers, not cellulose particles), according to need. When the suspension is produced, it may be produced using only water or water mixed with other organic solvent (e.g., an alcohol such as ethanol), a surfactant, an acid, a base, and the like.

In the oxidizing and pulverizing treatments a hydroxy group at C6-position of a cellulose-constituting unit is selectively oxidized to a carboxyl group via an aldehyde group to produce pulverized high crystalline cellulose fibers having an average fiber diameter of not more than 200 nm composed of a cellulose having the content of carboxyl groups from 0.1 to 2 mmol/g. The high crystalline cellulose fibers have Type I crystal structure of cellulose. This means that the cellulose fibers are produced by surface oxidation and pulverization of a natural solid cellulose having Type I crystal structure. That is, natural cellulose fibers have a higher ordered solid structure through formation of many bundles of fine fibers, called microfibrils, produced in a biosynthesis process of the natural cellulose fibers. In the present invention, strong cohesion force (hydrogen bonding between surfaces) among microfibrils is reduced by introducing aldehyde or (carboxyl groups and then fine cellulose fibers are obtained by pulverization.

The content of carboxyl groups can be increased or decreased within a given range by adjusting oxidizing treatment conditions, thereby changing polarity of the cellulose fiber. An average fiber diameter, an average fiber length, an average aspect ratio, and the like of the cellulose fibers can be controlled by thus controlling electrostatic repulsion of carboxyl groups and pulverizing conditions.

The cellulose fibers produced by the oxidizing and pulverizing treatments can satisfy the following requirements (I), (II), and (III :

(I) : the cellulose fibers have good properties such that a suspension of the cellulose fibers, diluted to 0.1% by mass of a solid content, contains cellulose fibers passing through a 16 $\mu$m-mesh glass filter in an amount of 5% or more by mass of the whole cellulose fibers in the suspension before passing;

(II) : a suspension of the cellulose fibers diluted to 1% by mass of solid content contains no cellulose particle having a particle diameter of 1 $\mu$m or more; and

(III) : a suspension of the cellulose fibers diluted to 1% by mass of solid content has a light transmittance of 0.5% or more.

Requirement (I) : The suspension of the cellulose fibers having 0.1% by mass of the solid content, produced by the oxidizing treatment and pulverizing treatment, contains cellulose fibers passing through a 16 $\mu$m-mesh glass filter in an amount of 5% or more by mass of the whole cellulose fibers in the suspension before passing (a percentage by mass of fine cellulose fibers passing through the glass filter is referred to as a content of fine cellulose fibers). From the viewpoint of gas barrier properties, the content of fine cellulose fibers is preferably 30% or more, and more preferably 90% or more.

Requirement (II) : The suspension of the cellulose fibers having 1% by mass of the solid content, produced by the oxidizing treatment and pulverizing treatment, contains pulverized fibers of the starting natural fibers and it is preferable not to contain cellulose particles having particle diameters of 1 $\mu$m or more. In the invention, the "particle" refers to that having a nearly spherical shape and a projection geometry (projected geometry) of the shape on a plane in which a rectangle encompassing the geometry has a ratio of a long axis to a short axis (long axis/short axis) of 3 at the maximum. The particle diameter of the particle is defined by an arithmetic average of the long axis and the short axis. The presence or absence of the particle is determined by observation with an optical microscope described below.

Requirement (III) : The suspension of the cellulose fibers of 1% by mass of solid content produced by the oxidizing and pulverizing treatments preferably has a light transmittance of 0.5% or more, and from the viewpoint of gas barrier properties, more preferably 40% or more, and even more preferably 60% or more.

It is thought that in a gas barrier layer composed of the cellulose fibers produced by the oxidizing and pulverizing treatments, fine cellulose fibers may strongly interact with each other to form hydrogen bonds and/or crosslink, thereby preventing gas dissolution and diffusion, and the gas barrier layer may thus exhibit gas barrier properties such as high oxygen barrier properties. In addition, since a pore size and a pore distribution of the cellulose fibers of a molded article can be varied (in other words, effects of molecular sieving can be varied) according to a width and a length of cellulose fibers, the gas barrier layer can be expected to have molecular selective barrier properties.

In preparing a suspension of the cellulose fibers of the present invention, the sold content of the suspension can be adjusted to be suitable for forming as desired. For example, the solid content may be in the range from 0.05 to 30% by mass.

2) Gas barrier material containing a cross-linking agent

The surfaces of the oxidized cellulose fibers have a hydroxy group, an aldehyde group, and/or a carboxyl group on the surface thereof, and can react with a cross-linking agent having a reactive functional group with these groups to form a cross-linking structure among the cellulose fibers.

Formation of the cross-linking structure of the cellulose fibers via the cross-linking agent having a reactive functional group provides a gas barrier molded article composed of the cellulose fibers good oxygen barrier properties and water vapor barrier properties under humid environment.

The cross-linking agent used in the present invention has a reactive functional group with the cellulose fibers. Examples of the reactive functional group include an epoxy group, an aldehyde, an amino group, a carboxyl group, an isocyanate group, a hydrazide group, an oxazolyl group, a carbodiimide group, an azetidinium group, an alkoxide group, a methylol group, and a silanol group. The cross-linking agent used in the present invention is a compound having two or more reactive functional groups described above. The cross-linking agent may have the same two reactive functional groups as each other and may have two different reactive functional groups from each other, selected from the above. The cross-linking agent preferably contains the same two or more functional groups as each other. Examples of the cross-linking agent used in this step of the present invention include polyamide-epichlorohydrin resins (azetidinium, group), polyacrylic acid (carboxyl group), and polyisocyanates (isocyanate group).

The cross-linking agent used in the present invention has the reactive functional group and preferably has a molecular weight of not more than 500, and more preferably 100 or less. Examples of the cross-linking agent having a molecular weight of not more than 500 include glyoxal (ethanedial) (molecular weight: 58), adipic acid dihydrazide (molecular weight: 174), glutaraldehyde (1,5-pentanedial) (molecular weight: 100), and citric acid (molecular weight: 192). It is noted that a cross-linking agent having a molecular weight of not more than 500 but also having a carbodiimide group significantly decreases oxygen barrier properties of a product and is unsuitable for the cross-linking agent of the present invention. Butanetetracarboxylic acid (molecular weight: 234) can also be used, but tends to form aggregations when mixed with the suspension containing the cellulose fibers.

For the cross-linking agent used in the present invention, preferred are those having a molecular weight of not more than 500, and particularly preferred are citric acid having a carboxyl group and glyoxal having an aldehyde group, more preferably glutaraldehyde.

The gas barrier material of the present invention may be a suspension prepared by mixing the suspension of the specified cellulose fibers with an aqueous solution or emulsion of the cross-linking agent, or a solid product by drying the suspension.

From the viewpoints of prevention of aggregation of cellulose fibers and gas barrier properties, an amount of the cross-linking agent added is such that a solid content of the cross-linking agent is preferably 0.1 to 50 parts by mass, more preferably 0.5 to 30 parts by mass, and even more preferably 1 to 20 parts by mass to 100 parts by mass of solid content of the cellulose fibers. In adding the cross-linking agent, the agent can be in any form such as powder, liquid, solution, and emulsion.

The gas barrier material may contain other additive. Examples of the additive include conventional fillers, colorants such as a pigment, UV absorbers, antistats, clay minerals (e.g., montmorillonite), metal salts, colloidal silica, alumina sol, and titanium oxide.

<Gas barrier molded article>

The gas barrier molded article of the present invention can be either:

(i) a product produced by forming the gas barrier material without a substrate, or
(ii) a product containing a molded substrate and a layer of the gas barrier material on the surface thereof.

For the molded substrate, those can be used, including thin layer articles having desired shape and size such as film, sheet, woven fabric, and nonwoven fabric, and tridimensional containers of various shapes and sizes such as boxes and bottles. These molded substrates can be of paper, paperboard, plastic, metal (those having many pores or in the form of woven metal mainly used for reinforcing), or composite material thereof. Among these materials, preferably used are plant-derived materials such as paper and paperboard, biodegradable materials such as biodegradable plastics, and biomass-derived materials. The molded substrate may have a multi -layer structure, composed of the same material or different materials in combination (e.g., composed of different adhesives and wetting-increasing agents).

The substrate can be composed of plastic appropriately selected according to an intended use. Examples of the plastic include polyolefins such as polyethylene and polypropylene, polyamides such as nylons 6, 66, 6/10, and 6/12, polyesters such as poly(ethylene terephthalate) (PET), poly(butylene terephthalate), aliphatic polyesters, polylactic acid (PLA), polycaprolactone, and polybutylene succinate, cellophanes such as cellulose, and triacetic acid cellulose (TAC). These plastics may be used alone or in combination.

A thickness of the molded substrate is not specifically limited, and appropriately selected so as to provide a strength suitable for an intended use. For example, the thickness is within the range from 1 to 1000 $\mu$m.

A thickness of the layer composed of the gas barrier material (gas barrier layer) is not specifically limited, and appropriately selected so as to provide gas barrier properties suitable for an intended use. For example, the thickness is within the range from 20 to 5000 nm.

<Method for producing a gas barrier molded article>

In the case of the gas barrier molded article without the molded substrate (gas barrier film), film is produced by casting the gas barrier material on a base plate such as a glass plate and drying the cast material naturally or by blowing. It is then peeled from the base plate to obtain a gas barrier molded article of the invention (gas barrier film).

In cases of the gas barrier molded article containing the molded substrate and a layer of the gas barrier material thereon (substrate + gas barrier layer), it is produced by, for example, attaching the gas barrier material to the substrate on one side or both sides by known methods such as applying, spraying, and immersion, preferably by applying or spraying, and drying the attached material naturally or by blowing.

The gas barrier material used in this step is a suspension prepared by mixing the suspension of the specified cellulose fibers with the reactive cross-linking agent having a functional group. In the prepared suspension, a concentration of the specified cellulose fibers is preferably around 0.05 to 30% by mass, and more preferably 0.5 to 5% by mass.

In the next step, the gas barrier molded article from the previous step is heat-treated at a temperature of 25°C or more. It is speculated that in the gas barrier laminate thus produced, cellulose fibers and the cross-linking agent form a more solid cross-linking structure to increase gas barrier properties.

A heating temperature can be appropriately selected within the range that can facilitate formation of the cross-linking structure. The temperature range is preferably 25 to 200°C, and more preferably 100 to 160°C. The lower heating temperature takes the longer heating time. The higher heating temperature can cause problems of distortion (e.g., shrinkage and curling) and deterioration (e.g., pyrolysis) of the substrate or the gas barrier layer. A heating time can be appropriately selected within the range that can facilitate formation of the cross-linking structure and does not cause distortion or alteration of the substrate and/or the gas barrier layer. The range is, for example, from 1 to 120 minutes.

In the present invention, the gas barrier molded article having intended properties according to design (high barrier properties, transparency, etc.) can be produced by controlling the content of carboxyl groups and an aspect ratio of cellulose fibers and a thickness of the gas barrier molded article, or by controlling the kind and the added amount of the cross-linking agent.

In the present invention, the gas barrier molded article having intended properties according to design (high barrier properties, transparency, etc.) can also be produced by controlling the reaction between the cross-linking agent and the cellulose fibers by controlling the heating temperature and the heating time.

The gas barrier molded article of the present invention is a film or a sheet or the like composed of cellulose fibers forming the cross-linking structure.

The gas barrier molded article of the present invention has moisture resistant properties due to formation of the cross-linking structure, and can be used for, in addition to gas barrier materials, separation membranes for water purification, separation membranes for alcohol, polarizing films, polarizer protection films, flexible transparent substrates for display, separators for fuel cell, condensation-preventing sheets, antireflection sheets, UV shield sheets, and infrared shield sheets.

Below, B6 of the present invention will be described in detail.

The cellulose fibers are prepared as in A3 of the present invention above. The followings are additional description for B6 of the present invention.

B6 of the present invention is the method for producing a film, including steps of: forming a film material of a suspension containing cellulose fibers, and then drying it or heating it, wherein the cellulose fibers have an average fiber diameter of not more than 200 nm and the content of carboxyl groups in the cellulose composing the cellulose fibers of 0.1 to 2 mmol/g. The cellulose fibers are cross-linked by drying.

The cellulose fibers used in the present invention have an average aspect ratio from 10 to 1,000, more preferably from 10 to 500, even more preferably from 100 to 350, and still even more preferably 100 to 235. The average aspect ratio can be measured by the method described in Examples.

In production of the film according to the method of the present invention, cellulose fibers having a higher content of carboxyl groups within the range as above are preferable, providing the higher oxygen barrier properties. From the viewpoint of increasing oxygen barrier properties, the content of carboxyl groups is preferably 1.0 mmol/g or more, and more preferably 1.4 mmol/g or more within the range described above.

Such a pulverizing treatment can produce cellulose fibers having an average fiber diameter of not more than 200 nm, and further having an average aspect ratio of 10 to 1,000, more preferably 10 to 500, even more preferably 100 to 350, and still even more preferably 100 to 235. In the method of the present invention, cellulose fibers having a smaller aspect ratio, or a shorter average fiber length are preferable, providing the higher oxygen barrier properties. From the viewpoint of increasing oxygen barrier properties, within ranges of the average fiber diameter and the average aspect ratio, the average aspect ratio is preferably 350 or less, and more preferably 235 or less.

Then, the cellulose fibers can be obtained in the form of a suspension having an adjusted solid content or in the form of a dried powder (powdery aggregates of cellulose fibers, not cellulose particles) according to need. When the suspension is produced, it may be produced using only water or water mixed with other organic solvent (e.g., an alcohol such as methanol) a surfactant, an acid, a base, and the like.

The oxidizing treatment and pulverizing treatment convert a hydroxy group at C6-position of a cellulose-constituting unit to a carboxyl group via an aldehyde group by selective oxidation to produce pulverized high crystalline cellulose fibers having an average fiber diameter of not more than 200 nm composed of a cellulose having the content of carboxyl groups from 0.1 to 2 mmol/g. After the oxidizing treatment, the cellulose fibers contain unreacted hydroxy and aldehyde groups. A remaining amount of aldehyde groups is 0.1 to 0.6 mmol/g when the content of carboxyl groups is 0.1 to 2 mmol/g.

The high crystalline cellulose fibers have Type I crystal structure of cellulose. This means that the cellulose fibers are produced by surface oxidation and pulverization of a natural solid cellulose having Type I crystal structure. In other words, natural cellulose fibers have a higher ordered solid structure through formation of bundles of fine fibers, called microfibrils, produced in a biosynthesis process of the natural cellulose fibers. In the present invention, strong cohesion force (hydrogen bonding between surfaces) among microfibrils is reduced by introducing aldehyde or carboxyl groups and then fine cellulose fibers are obtained by pulverization.

It is thought that in a film composed of the cellulose fibers produced by the oxidizing and pulverizing treatments of B6, fine cellulose fibers may strongly interact with each other to form hydrogen bonds and/or crosslink, thereby preventing gas dissolution and diffusion, and the film may thus exhibit gas barrier properties such as high oxygen barrier properties. In addition, since a size and a distribution of pores among cellulose fibers of a formed article can be varied (in other words, effects of molecular sieving can be varied) according to a width and a length of cellulose fibers, the film can be expected to have molecular selective barrier properties.

For the suspension of the cellulose fibers of the present invention, the sold content of the suspension can be adjusted to be suitable for forming as desired. For example, the solid content may be in the range from 0.05 to 30% by mass.

The suspension of the cellulose fibers may contain other additive. Examples of the additive include conventional fillers, colorants such as a pigment, UV absorbers, antistats, clay minerals (e.g. , montmorillonite), metal salts, colloidal silica, alumina sol, and titanium oxide.

<Step of forming a film material>

In this step, the suspension containing the cellulose fibers prepared as above is used to form a film material of the suspension (in a state of wet and fluent).

This step may be performed, for example, by either step of:

(i) forming a film material of the suspension containing the cellulose fibers on a base plate; or
(ii) forming a film material of the suspension containing the cellulose fibers on a substrate such as a resin film.

[Step (i) of molding]

A suspension of cellulose fibers having a viscosity of around 10 to 5000 mPa·s is cast on a base plate such as a glass plate to obtain a film material. Then, the prepared film material can be heated, dried, and peeled from the base plate to obtain a film. By controlling the content of carboxyl groups and an aspect ratio of cellulose fibers of the suspension used and a thickness of the film, the film having intended properties according to design (high barrier properties, transparency, etc.) can be produced.

[Step (ii) of molding]

A suspension of cellulose fibers is attached on a substrate such as a resin film at one side or both sides by known methods such as applying, spraying, and immersion, preferably by applying or spraying to form a film material on the substrate. Then, the film material can be heated and dried to obtain a molded composite containing the substrate and the film layered thereon.

The molded substrate is the same as A4 of the present invention.

<Step of drying with heat>

In step of drying with heat, a film material of the suspension of the cellulose fibers is formed on the base plate or substrate and then is dried with heat. It may be dried with heat in the wet and fluent stage. It may be alternatively dried until it loses the fluidity and the obtained film may be then dried with heat.

The "film material losing its fluidity" refers specifically that, for a film formed by the step (i), it is in the state that can be peeled from the base plate, for a film formed by the step (ii), it is in the state that does not wrinkle or break on the substrate when subjected to light external force (e.g. , when picked with singers). More specifically, the film material is in a state dried to the equilibrium water content at a temperature of 20°C $\pm$ 15°C and a humidity of 45 to 85%RH. Once the film is maintained to have the equilibrium water content at the temperature range and the humidity range, it can preferably be easily stored as an intermediate or processed according to purposes such as for printing or layering a protect layer.

To produce a film having good gas barrier properties, the step of drying with heat dries the film material to a water content 90% or less, more preferably 75% or less, even more preferably 50% or less, and still even more preferably 10% or less of the equilibrium water content at 23°C and relative humidity of 60%RH. In the drying step with heat, the lower limit of the water content of the film is 1% or more, more preferably 2% or more, and even more preferably 5% or more of the equilibrium water content. The equilibrium water content at 23°C and relative humidity of 60%RH is determined by measuring a film prepared by the step of drying with heat and stored in an atmosphere of 23°C and 60%RH until it reaches to the equilibrium state. The water content and the equilibrium water content of the film can be measured by the method described in Examples.

The upper limit of the temperature of the step of drying with heat is preferably 50 to 250°C, more preferably 100 to 160°C, and even more preferably 120 to 160°C. The step performed at 50°C or higher can reduce a time to reach to an intended water content. The step performed at 250°C or lower can prevent damage on the film of the cellulose fibers or the substrate. Conditions such as a drying time, a pressure in a drying oven, and a convection flow can be appropriately selected so as to reach to an intended water content.

For drying with heat, any known means can be used, including an electric drying oven (natural convection type or forced convection type), a hot air circulation type drying oven, a drying oven combining far-infrared heating and hot air circulation, and a decompression drying oven that can heat under reduced pressure, and the like.

The product thus dried with heat is cooled to an ambient temperature. In cases of employing the step (I), the product is peeled from the base plate to obtain the film. In cases of employing the step (II), the product is a molded composite having a layered structure of the substrate and the film (cellulose fiber layer). The product returns to the equilibrium state having the equilibrium water content at that temperature and humidity conditions. The product dried, in the drying with heat, until having a water content smaller than the equilibrium water content at 23°C and a relative humidity of 60%RH achieves good gas barrier properties. The reason is assumed that the step of drying with heat causes chemical or physical change in the structure of the film (structure of the cellulose fiber layer) to produce a compact structure, and the compact structure is kept even subjected to temperature and humidity change.

A water content of the cellulose fiber layer can be determined qualitatively and quantitatively by measuring difference of weight before and after drying/heating, by calorimetry, and by infrared absorption spectrometry, and the like.

The method of the present invention can further include forming a moisture preventive layer to increase moisture preventive properties according to need.

For layering the moisture preventive layer, known methods can be used, including adhering with an adhesive, pasting by heat fusion, applying, spraying, and immersion. In this case, for the substrate and the moisture preventive layer having high moisture-proof properties, the following can be used, including plastics such as polyolefin and polyester, plastics on which an inorganic oxide (e.g., aluminum oxide and silicon oxide) is deposited, laminates of plastics with paperboard, wax, and wax-coated paper. For the substrate and the moisture preventive layer having high moisture-proof properties, preferably used are those having a water vapor permeability of 0.1 to 600 g/m²·day, more preferably 0.1 to 300 g/m²·day, and even more preferably 0 .1 to 100 g/m²·day. Use of the substrate having such a high moisture-proof properties and the gas barrier molded composite having the moisture preventive layer enables prevention of water vapor dissolution and dispersion in the cellulose fiber layer, thereby preventing reduction of gas barrier properties under high humidity conditions.

Below, C7 and C8 of the present invention will be described in detail.

The cellulose fibers are prepared as in A3 of the present invention above. The followings are additional description for C7 and C8 of the present invention.

The suspension of the cellulose fibers may contain other additive. Examples of the additive include conventional fillers, colorants such as a pigment, UV absorbers, antistats, clay minerals (e.g., montmorillonite), metal salts, colloidal silica, alumina sol, and titanium oxide.

<Step of forming a film material on a base plate or a substrate>

In this step, a suspension is prepared from the cellulose fibers prepared by the above method and used, or the suspension containing the cellulose fibers prepared by the method of production is used to form an intended film material.

This step may be performed, for example, by either step of:

(i) forming a film material of the suspension containing the cellulose fibers on a base plate; or
(ii) forming a film material of the suspension containing the cellulose fibers on a substrate to obtain a composite film.

[Step (i) of molding]

A suspension of cellulose fibers having a viscosity of around 10 to 5000 mPa·s is cast on a hard surface base plate such as of glass and metal to obtain a film material. In this step, by controlling the content of carboxyl groups and an aspect ratio of the cellulose fibers in the suspension and a thickness of the gas barrier molded article, a film having intended properties according to design (high barrier properties, transparency, etc.) can be produced.

[Step (ii) of molding]

A suspension of cellulose fibers is attached on a substrate at one side or both sides by known methods such as applying, spraying, and immersion, preferably by applying or spraying to form a film.

It is also possible to layer and adhere a film previously prepared by, for example, the step (i) with a suspension of the cellulose fibers to a substrate. For adhering, known methods can be used, including adhering with an adhesive and heat fusion etc.

A thickness of the layer composed of the cellulose fibers can be appropriately set according to an intended use. When used as a gas barrier material, the thickness is preferably 20 to 900 nm, more preferably 50 to 700 nm, and even more preferably 100 to 500 nm.

The molded substrate is same to A4 of the present invention.

<Step of drying>

The film material formed in the previous step may be used as is in step of attaching an aqueous solution of the cross-linking agent, or may subjected to step of drying before the step of attaching.

In the step of drying, the film is dried naturally or by blowing at a room temperature (around 20 to 25°C), or by heating.

A degree of drying is, for example, as follows: for a film material formed by the step (i), the degree is such that the film can be peeled from the base plate (the film may not be peeled therefrom until the step of cross-linking completes) ; and for a film material formed by the step (ii), the degree is such that the film does not wrinkle or break on the substrate when subjected to light external force (e.g., when picked with fingers).

<Step of attaching an aqueous solution of the cross-linking agent to a film material that is dried or not dried (in a wet state)>

For attaching an aqueous solution of the cross-linking agent to the film material, these methods can be used:

(a) spraying the aqueous solution of the cross-linking agent on the surface of the film material,
(b) applying the aqueous solution of the cross-linking agent on the surface of the film material,
(c) casting the aqueous solution of the cross-linking agent on the surface of the film material, and
(d) immersing the film material together with the base plate or the substrate in whole in the aqueous solution of the cross-linking agent.

In this step, it is possible to attach the aqueous solution of the cross-linking agent to the film material and allow it to stand in a while at room temperatures. It is optionally possible to allow it at a pressurized atmosphere for penetrating into the film material. In cases of applying the aqueous solution of the cross-linking agent on the film material in a wet state, the cross-linking agent easily penetrates into the film material. In cases on the film material in a dry state, the cross-linking agent tends to stay on or near the surface of the film material.

When a suspension of cellulose fibers containing a cross-linking agent is used to form a film material on a substrate, some cross-linking agents (e.g., butanetetracarboxylic acid) may cause aggregation to obtain a heterogeneous distribution of cellulose fibers in the material for film, resulting in heterogeneous progress of a cross-linking reaction. In this case, although a coated film can be obtained, it may differ from an intended film. Use of the step of the present invention, however, can prevent the problem regardless of the type and the feeding amount of the cross-linking agent, and can produce an intended film.

In the method (a), for example, a film having a surface area of 500 cm$^2$ can be sprayed with an aqueous solution of 1 to 30% by mass cross-linking agent in the whole amount of 0.1 to 10 ml.

The oxidized cellulose fibers have a hydroxy group, an aldehyde group, and/or a carboxyl group on the surface thereof, and can react with a cross-linking agent having a reactive functional group with these groups to form a cross-linking structure of these cellulose fibers.

The cross-linking agent used in this step is a compound having two or more reactive functional groups each selected from an epoxy group, an aldehyde group, an amino group, a carboxyl group, an isocyanate group, a hydrazide group, an oxazolyl group, a carbodiimide group, an azetidinium group, an alkoxide group, a methylol group, a silanol group and a hydroxy group. These two or more reactive functional groups maybe same or different. The cross-linking agent preferably contains the same two or more functional groups. Examples of the cross-linking agent used in this step include polyamide-epichlorohydrin resins (azetidinium group), polyacrylic acids (carboxyl group), and polyisocyanates (isocyanate group).

The cross-linking agent used in this step preferably has the smaller molecular weight for the easier penetration into the film material. For example, the molecular weight is preferably not more than 500, and more preferably 250 or less. The cross-linking agent used also preferably has two or more reactive functional group selected from an aldehyde group, a carboxyl group and a hydrazide group.

Examples of the preferred cross-linking agent include, adipic acid dihydrazide (molecular weight: 174), glyoxal (ethanedial) (molecular weight: 58), butanetetracarboxylic acid (molecular weight: 234), glutaraldehyde (1,5-pentanedial) (molecular weight: 100), citric acid (molecular weight: 192). It is noted that a cross-linking agent having a molecular weight of not more than 500 but also having a carbodiimide group significantly decreases oxygen barrier properties of a product and is unsuitable for the cross-linking agent of the present invention.

A film is produced by attacking the aqueous solution of the cross-linking agent and drying for two or more hours at an ambient temperature (20 to 25˚C).

An amount of the cross-linking agent attached to the film can be appropriately selected according to the amount of the cellulose fibers and the amount of the functional groups of the cross-linking agent and penetration of the cross-linking agent into the film material. The amount is preferably 0.1 to 200% by mass, and more preferably 10 to 100% by mass of the solid cellulose in the same area. The amount attached of the cross-linking agent can be determined qualitatively and quantitatively by measuring a difference in mass after the attaching, by calorimetry, and by infrared absorption spectrometry, and the like.

<step of cross-linking>

In this step, cellulose fibers are cross-linked among them with heat according to need. Heating conditions are preferably appropriately selected to optimize the cross-linking reaction according to the type and the amount attached of the cross-linking agent used.

For example, when the cross-linking agent having a low molecular weight (e.g., adipic acid dihydrazide, glyoxal, butanetetracarboxylic acid, glutaraldehyde, citric acid) is used, the step is performed with heat for 1 to 300 minutes, and more preferably 5 to 60 minutes at 30 to 300˚C, more preferably 60 to 200˚C, and even more preferably 100 to 160˚C.

Formation of a cross-linking structure among cellulose fibers via the cross-linking agent having a reactive functional group can provide a film composed of these cellulose fibers having high gas barrier properties.

The film produced by the method of the present invention has moisture resistant properties due to formation of the cross-linking structure, and can be used for, in addition to gas barrier materials, separation membranes for water purification, separation membranes for alcohol, polarizing films, polarizer protection films, flexible transparent substrates for display, separators for fuel cell, condensation-preventing sheets, antireflection sheets, UV shield sheets, and infrared shield sheets.

The method of the present invention can further include forming a moisture preventive layer to increase moisture preventive properties after the cross-linking reaction, according to need.

For layering the moisture preventive layer, known methods can be used, including adhering with an adhesive, pasting by heat fusion, applying, spraying, and immersion. In this case, for the substrate and the moisture preventive layer having high moisture-proof properties, the following can be used, including plastics such as polyolefin and polyester, plastics on which an inorganic oxide (e.g., aluminum oxide and silicon oxide) is deposited, laminates of plastics with paperboard, wax, and wax-coated paper. For the substrate and the moisture preventive layer having high moisture-proof properties, preferably used are those having a water vapor permeability of 0.1 to 600 g/m$^2$·day, more preferably 0.1 to 300 g/m$^2$·day, and even more preferably 0.1 to 100 g/m$^2$·day. Use of the substrate having such a high moisture-proof properties and the formed product having the moisture preventive layer enables prevention of water vapor dissolution and dispersion in the gas barrier layer, thereby increasing gas barrier properties.

The present inventionprovides the following D9, D10, D11, and D12.

D9. A method for producing a gas barrier laminate containing a substrate composed of a polyalkylene terephthalate and a gas barrier layer, including applying a gas barrier material to the substrate and drying it,
wherein the gas barrier material is a suspension containing fine cellulose fibers and a polyamideamine-epichlorohydrin resin in an amount of 0.1 to 50 parts by mass to 100 parts by mass of the fine cellulose fibers,
wherein the fine cellulose fibers have an average fiber diameter of not more than 200 nm and the content of carboxyl groups in the cellulose composing the cellulose fibers of 0.1 to 2 mmol/g,
and wherein a temperature of drying is 60 to 250˚C.

D10. A method for producing a gas barrier laminate containing a substrate composed of a polyamide and a gas barrier layer, including applying a gas barrier material to the substrate and drying it,
wherein the gas barrier material is a suspension containing fine cellulose fibers and a polyamideamine-epichlorohydrin resin in an amount of 5 to 50 parts by mass to 100 parts by mass of the fine cellulose fibers,
wherein the fine cellulose fibers have an average fiber diameter of not more than 200 nm and the content of carboxyl groups in the cellulose composing the cellulose fibers of 0.1 to 2 mmol/g,
and wherein a temperature of drying is 110 to 170˚C.

D11. A method for producing a gas barrier laminate containing a substrate composed of a polyamide and a gas barrier layer, including applying a gas barrier material to the substrate and drying it,
wherein the gas barrier material is a suspension containing fine cellulose fibers and a polyamideamine-epichlorohydrin resin in an amount of 20 to 50 parts by mass to 100 parts by mass of the fine cellulose fibers,
wherein the fine cellulose fibers have an average fiber diameter of not more than 200 nm and the content of carboxyl groups in the cellulose composing the cellulose fibers of 0.1 to 2 mmol/g,
and wherein a temperature of drying is 80 to 170˚C.

D12. A method for producing a gas barrier laminate containing a substrate composed of an olefin resin and a gas barrier layer, including applying a gas barrier material to the substrate and drying it,
wherein the gas barrier material is a suspension containing fine cellulose fibers and an aqueous polyisocyanate in an amount of 5 to 50 parts by mass to 100 parts by mass of the fine cellulose fibers,
wherein the fine cellulose fibers have an average fiber diameter of not more than 200 nm and the content of carboxyl groups in the cellulose composing the cellulose fibers of 0.1 to 2 mmol/g,
and wherein a temperature of drying is 60 to 140˚C.

D9, D10, D11, and D12 of the present invention include the following aspects.

The method for producing a gas barrier laminate according to D9, wherein the polyalkylene terephthalate is poly(ethylene terephthalate) or poly(butylene terephthalate).

The method for producing a gas barrier laminate according to D10 or D11, wherein the polyamide is nylon 6, nylon 66, nylon 610, or nylon 612.

The method for producing a gas barrier laminate according to D12, wherein the olefin resin is polypropylene and/or polyethylene.

Below, D9, D10, D11, and D12 of the present invention will be described in detail.

<Substrate>

For the substrate composed of the polyalkylene terephthalate used in the present invention, a film and a sheet and the like composed of poly(ethylene terephthalate) or poly(butylene terephthalate) can be used.

For the substrate composed of the polyamide used in the present invention, a film and a sheet and the like composed of nylon 6, nylon 66, nylon 610, or nylon 612 can be used.

In another embodiment of the present invention, the substrate composed of the olefin resin can also be used. Examples of the olefin resin used include polypropylene, polyethylene, and alloys thereof.

The substrate can be formed by known forming methods for resin such as extrusion molding of film and sheet with a T-die extruder. The substrate may further be stretched according to need. The substrate can also be a commercially available film or sheet.

The substrate can contain known resin additives within the range that can solve the problem of the present invention, including fillers, colorants such as a pigment, UV absorbers, and antistats.

A thickness of the substrate can be appropriately selected so as to provide a strength suitable for an intended use. For example, the thickness is selected within the range of 1 to 1000 μm.

<Gas barrier material>

The gas barrier material used in the present invention is a suspension containing fine cellulose fibers and the polyamideamine-epichlorohydrin resin or aqueous polyisocyanate.

The cellulose fibers are prepared as in A3 of the present invention above.

In the present invention, for the substrate composed of the polyalkylene terephthalate or polyamide, a suspension is prepared by blending the fine cellulose fibers with polyamideamine-epichlorohydrin resin.

The polyamideamine-epichlorohydrin resin used in the present invention is produced by adding epichlorohydrin to a polyamideamine intermediate and heating to convert to an azetidinium chloride (AZR group).

In the present invention, for the substrate composed of the olefin resin, a suspension is prepared by blending the fine cellulose fibers with the aqueous polyisocyanate (water-dispersed (isocyanate).

The aqueous polyisocyanate used in the present invention can be produced by adding a hydrophilic chain or a lipophilic chain, having active hydrogen, to a starting polyisocyanate. The aqueous polyisocyanate is preferably produced by introducing an alkylene oxide chain to at least one polyisocyanate selected from aliphatic polyisocyanates and derivatives thereof. The aqueous polyisocyanate may be linked with a lipophilic chain according to need.

The aliphatic polyisocyanate used in the production above include tetramethylene diisocyanate, pentamethylene diisocyanate, hexamethylene diisocyanate, trimethylhexamethylene diisocyanate, and lysine diisocyanate, and the like.

For the aqueous polyisocyanate used in the present invention, a commercial product can be used. Examples of the commercial product include a modified hexamethylene diisocyanate adduct [Asahi Kasei Chemicals Corporation, Duranate WB40-80D (trade same)], isocyanurate-modified hexamethylene diisocyanates [Sumika Bayer Urethane Co., Ltd., Bayhydur 3100 (trade name)] and [Nippon Polyurethane Industry Co., Ltd. , Aquanate 100, Aquanate 200 (both are trade names)] .

The aqueous polyisocyanate used in the present invention is known and described in, JP-A 2000-19678 [0028], JP-A 2000-272254 [0043], JP-A 2002-60455 [0017] and [0018], JP-A 2005-213411 [0048] to [0058], JP-A 2005-272590 [0025] and [0033], and JP-A 2005-336644 [0015] to [0023] and the like.

The gas barrier material used in the present invention can contain known additives within the ranges of the type and the amount that can solve the problem of the present invention. Examples of the additive include fillers, colorants such as a pigment, UV absorbers, antistats, waterproofing agents (e.g., a silane coupling agent), clay minerals (e.g., montmorillonite), cross-linking agents (additives having a reactive functional group such as an epoxy and an isocyanate groups), metal salts, colloidal silica, alumina sol, and titanium oxide.

<Steps of applying and drying >

The method for producing the gas barrier laminate of the present invention includes applying the gas barrier material to the substrate and drying to form the gas barrier layer on the substrate. As described below, drying conditions should be selected according to a combination of the substrate and the gas barrier material (particularly an amount used of the polyamideamine-epichlorohydrin resin to the fine cellulose fibers) employed.

[Step of applying]

For applying, known methods such as application with a bar coater can be employed.

[Step of drying]

(Embodiment with a substrate composed of polyalkylene terephthalate)

When the gas barrier material is a suspension containing 100 parts by mass of the fine cellulose fibers and fine cellulose fibers and 0.1 to 50 parts by mass of polyamideamine-epichlorohydrin resin, the heating temperature is 60 to 250˚C, preferably 80 to 150˚C, and more preferably 80 to 120˚C, and a drying time is preferably for 30 minutes.

When the gas barrier material is a suspension containing fine cellulose fibers and a polyamideamine-epichlorohydrin resin in a ratio of 0.1 to 10 parts by mass of the resin to 100 parts by mass of the fine cellulose fibers, a heating temperature is 60 to 250˚C, preferably 80 to 150˚C, and more preferably 80 to 120˚C, and a drying time is preferably for 30 minutes.

(Embodiment with a substrate composed of a polyamide)

When the gas barrier material is a suspension containing 100 parts by mass of the fine cellulose fibers and 5 to 50 parts by mass of polyamideamine-epichlorohydrin resin, the heating temperature is 110 to 170˚C, and the drying time is preferably for 30 minutes.

When the gas barrier material is a suspension containing fine cellulose fibers and a polyamideamine-epichlorohydrin resin in an amount of 5 or more and less than 20 parts by mass of the resin to 100 parts by mass of the fine cellulose fibers, a heating temperature is 150 to 170˚C, and a drying time is preferably for 30 minutes.

When the gas barrier material is a suspension containing 100 parts by mass of the fine cellulose fibers and 20 to 50 parts by mass of polyamideamine-epichlorohydrin resin, a heating temperature is 80 to 170˚C, and preferably 110 to 170˚C, and a drying time is preferably for 30 minutes.

(Embodiment with a substrate composed of an olefin resin)

When the gas barrier material is a suspension containing 100 parts by mass of the fine cellulose fibers and 5 to 50 parts by mass of an aqueous polyisocyanate, a heating temperature is 60 to 140˚C, and preferably 80 to 120˚C, and a drying time is preferably for 30 minutes.

<Other embodiments>

The method of the present invention can be applied to other embodiments having different combination of substrates and different suspensions containing fine cellulose fibers as described below.

(1) Other embodiment-1 (embodiment with a polyalkylene terephthalate substrate and a suspension containing fine cellulose fibers and an aqueous polyisocyanate)

A polyalkylene terephthalate composing a substrate, fine cellulose fibers, and an aqueous polyisocyanate that can be used are same to those described above.

A ratio of the aqueous polyisocyanate to the fine cellulose fibers is preferably 0.1 to 50 parts by mass, more preferably 0.1 to 20 parts by mass, and even more preferably 0.1 to 10 parts by mass of the aqueous polyisocyanate to 100 parts by mass of the fine cellulose fibers.

For drying, a heating temperature is preferably 60 to 250˚C, more preferably 80 to 150˚C, and even more preferably 80 to 120˚C, and a drying time is preferably for 30 minutes.

(2) Other embodiment-2 (embodiment with a polyamide substrate and a suspension containing fine cellulose fibers and an aqueous polyisocyanate)

A polyamide composing a substrate, fine cellulose fibers, and an aqueous polyisocyanate that can be used are same to those described above.

A ratio of the aqueous polyisocyanate to the fine cellulose fibers is preferably 0.1 to 50 parts by mass, more preferably 5 to 50 parts by mass, and even more preferably 5 to 10 parts by mass of the aqueous polyisocyanate to 100 parts by mass of the fine cellulose fibers.

For drying, a heating temperature is preferably 80 to 170˚C, more preferably 80 to 150˚C, and even more preferably 80 to 120˚C, and a drying time is preferably for 30 minutes.

(3) Other embodiment-3 (embodiment with a polyalkylene terephthalate substrate and a suspension containing fine cellulose fibers and an epoxy compound)

A polyalkylene terephthalate composing a substrate and fine cellulose fibers that can be used are same to those described above.

For the epoxy compound, a bifunctional or trifunctional or more-functional compound having two or three or more epoxy groups per molecule can be used.

Examples of the epoxy compound include aliphatic compounds such as ethylene glycol diglycidyl ether, polyethylene glycol diglycidyl ether, propylene glycol diglycidyl ether, polypropylene glycol diglycidyl ether, neopentyl glycol diglycidyl ether, diglycidyl ethers with glycols having 3 or more carbon atoms, hydrogenated Bisphenol-A diglycidyl ether, diglycidyl ethers with polybutadiene and the like, sorbitol polyglycidyl ether, polyglycol polyglycidyl ether, pentaerythritol polyglycidyl ether, diglycerol polyglycidyl ether, glycerol polyglycidyl ether, and triethylolpropylene polyglycidyl ether; and aromatic ring and cyclic compounds such as resorcinol diglycidyl ether, Bisphenol-A glycidyl ether, and triglycidyl isocyanurate.

Commercially available epoxy compounds can also be used. Examples of the commercial product include epoxy compounds available from Nagase ChemteX Corporation such as Denacol (registered trademark) series EX-611, EX-612, EX-614, EX-614B, EX-622, EX-512, EX-521, EX-411, EX-421, EX-313, EX-314, EX-321, EX-201, EX-211, EX-212, EX-252, EX-810, EX-811, EX-850, EX-851, EX-821, EX-830, EX-832, EX-841, EX-861, EX-911, EX-941, EX-920, EX-931, Denarex (registered trademark) series R-45EPT and EX-721, and EM-150 epoxy emulsion.

The epoxy compound used in the present invention is known and described in, for example, JP-A2005-219422 [0011] to [0015], JP-A 2008-266415 [0017], JP-A 2009-203351 [0022] and [0023], JP-A 7-26026 [0027], and JP-A 10-88089 [0025] and [0026].

A ratio of the epoxy compound to the fine cellulose fibers is preferably 5 to 50 parts by mass, more preferably 5 to 20 parts by mass, and even more preferably 5 to 10 parts by mass of the epoxy compound to 100 parts by mass of the fine cellulose fibers.

For drying, a heating temperature is preferably 90 to 250˚C, more preferably 90 to 150˚C, and even more preferably 90 to 120˚C, and a drying time is preferably for 30 minutes.

(4) Other embodiment-4 (embodiment with a polyamide substrate and a suspension containing fine cellulose fibers and an epoxy compound)

A polyamide composing a substrate, fine cellulose fibers and an epoxy compound that can be used are same to those described above.

A ratio of the epoxy compound to the fine cellulose fibers is preferably 5 to 50 parts by mass, more preferably 5 to 20 parts by mass, and even more preferably 5 to 10 parts by mass of the epoxy compound to 100 parts by mass of the fine cellulose fibers.

For drying, a heating temperature is preferably 90 to 170˚C, more preferably 90 to 150˚C, and even more preferably 90 to 120˚C, and a drying time is preferably for 30 minutes.

The method of the present invention can further include forming a coating layer (e.g. , a coating film or sheet) on the gas barrier layer for increasing moisture-proof properties and/or durability according to need. For forming the coating layer, methods such as hot-press and adhesion with an adhesive can be employed.

Examples

The following Examples demonstrate the present invention. Examples are intended to illustrate the present invention and not to limit the present invention.

A3, A4, and A5 will be described in detail with reference to the following Examples.

In Examples, properties are measured as described below.

(1) Cellulose fibers

(1-1) Average fiber diameter and average aspect ratio

For an average fiber diameter of cellulose fibers, a suspension of cellulose fibers diluted to a concentration of 0.0001% by mass was dropped on mica and dried to obtain an observation sample. The observation sample was measured for fiber height with an atomic force microscope (Nanoscope III Tapping mode AFM, Digital Instruments, with a probe PointProbe (NCH) available from Nanosensors). In an image showing recognizable cellulose fibers, five or more fibers were selected and used to determine the average fiber diameter from heights thereof.

An average aspect ratio was calculated from a viscosity of a diluted suspension (0.005 to 0.04% by mass) of cellulose fibers in water. The viscosity was measured at 20˚C with a rheometer (PHYSICA MCR300, DG42 (double cylinder), Anton Paar GmbH). Using the relationship between a mass concentration of cellulose fibers and a specified viscosity of a cellulose fiber suspension to water, an aspect ratio of cellulose fibers was backcalculated with the following formula and considered as an average aspect ratio of cellulose fibers.

formula 1:

$$\eta_{sp} = \frac{2\pi P^2}{45\left(\ln P - \gamma\right)} \times \frac{\rho_s}{\rho_0} \times C$$

Formula (8.138) for viscosity of solid stick molecule described in The Theory of Polymer Dynamics, M. DOI and D. F. EDWARDS, CLARENDON PRESS, OXFORD, 1986, P312 was used (in the present invention, solid stick molecule=cellulose fiber). The formula 1 is derived from Formula (8.138) and the relationship of $Lb^2 \times \rho_0 = M/N_A$. In the formulae, $\eta_{sp}$ represents a specified viscosity represents the circle ratio, ln represents the logarithm natural, P represents an aspect ratio (L/b), $\gamma=0.8$, $\rho_s$ represents a density of a dispersion medium (kg/m$^3$), $\rho_0$, represents a density of cellulose crystal (kg/m$^3$), C represents a mass concentration of cellulose ($C=\rho/\rho_s$), L represents a fiber length, b represents a fiber width (assuming that the cross section of the cellulose fiber is a square), p represents a concentration of cellulose fibers (kg/m$^3$), M represents a molecular weight, and $N_A$ represents Avogadro's number.

(1-2) Content of carboxyl groups (mmol/g)

0.5 g by absolute dry mass of oxidized pulp was introduced into a 100 ml beaker and ion-exchanged water was added thereto so that the total volume was 55 ml. 5 ml of 0.01M aqueous solution of sodium chloride was added to obtain a pulp suspension. The pulp suspension was stirred with a stirrer until pulp was well dispersed. To this, 0.1M hydrochloric acid was added to adjust a pH to 2.5 to 3.0. The suspension was subjected to titration by injecting 0.05 M aqueous solution of sodium hydroxide at a waiting time of 60 seconds with an automated titrator (AUT-501, DKK-Toa Corporation). A conductivity and a pH of the pulp suspension were repeatedly measured every one minute until a pH of the suspension reached to around 11. The resultant conductivity curve was used to determine a sodium hydroxide titer and calculate the content of carboxyl groups.

A natural cellulose fiber exists as a bundle of high crystalline microfibrils formed by aggregation of about 20 to 1500 cellulose molecules. Use of TEMPO oxidization in the present invention enables selective introduction of a carboxyl group to the surface of the crystalline microfibril. In practical, a carboxyl group was introduced only to the surface of cellulose crystal, but the content of carboxyl groups defined by the method of measurement above represents an average value per weight of cellulose.

(1-3) Light transmittance of a cellulose fiber suspension

Using a spectrophotometer (UV-2550, Shimadzu Corporation), a suspension of 1% by mass concentration was measured for light transmittance (%) at a wavelength of 660 nm with an optical path length of 1 cm.

(1-4) Mass percentage of fine cellulose fibers in a cellulose fiber suspension (a content of fine cellulose fibers) (%)

0.1% by mass suspension of cellulose fibers was prepared and measured for solid content. The suspension was suction-filtered through a 16 μm-mesh glass filter (25G P16, Shibata Scientific Technology Ltd.). The filtrate was measured for solid content. The solid content of the filtrate (Con1) was divided by the solid content of the suspension before filtration (Con2) . A value (Con1/Con2) was considered as the content of fine cellulose fibers (%).

(1-5) Observation of a cellulose fiber suspension

A suspension diluted to 1% by mass of solid content was prepared. A drop thereof was placed on a slide glass and covered with a cover glass to obtain an observation sample. Arbitrarily selected five spots in the observation sample were observed with an optical microscope (ECLIPSE E600 POL, Nikon Corporation) at 400-fold magnification for the presence or absence of a cellulose particle having a particle diameter of 1 μm or more. The "particle" refers to a particle having a nearly spherical shape and a projection geometry of the shape on a plane in which a rectangle enclosing the geometry has a ratio of a long axis to a short axis (long axis/short axis) of 3 at the maximum. The diameter of the particle is defined by an arithmetic average of the long and short axes. Observation under crossed nicols may be employed for clearer observation.

(2) Gas barrier film

(2-1) Oxygen permeability (Equal pressure method) (cm$^3$/m$^2$·day·pa)

Oxygen permeability was measured under conditions of 23˚C and 50%RH with an oxygen permeability tester OX-TRAN2/21 (model ML&SL, MOCON, Inc.) in accordance with the method of JIS K7126-2, Appendix A, and more specifically, in an atmosphere of oxygen gas of 23˚C and 50% RH and nitrogen gas (carrier gas) of 23˚C and a humidity of 50%. For some Comparative Examples, oxygen permeability was measured under conditions of 23˚C and 0% RH, and more specifically, in an atmosphere of oxygen gas of 23˚C and 0% RH and nitrogen gas (carrier gas) of 23˚C and a humidity of 0%.

(2-2) Water vapor permeability (g/m$^2$·day)

A water vapor permeability was measured by a cup method under conditions of 40˚C and 90% RH in accordance with JIS Z0208 .

Example A1

[Preparation of a cellulose fiber suspension]

(1) Starting Material, Catalyst, Oxidant, and Cooxidant

Natural fiber: bleached softwood kraft pulp (Fletcher Challenge Canada Ltd., trade name: Machenzie, CSF 650 ml)

TEMPO: commercial product (ALDRICH, Free radical, 98%)
Sodium hypochlorite: commercial product (Wako Pure Chemical Industries, Ltd., C1: 5%)
Sodium bromide: commercial product (Wako Pure Chemical Industries, Ltd.)

(2) Procedure of preparation

100 g of the bleached softwood kraft pulp was sufficiently stirred in 9900 g of ion-exchanged water. To this, per 100 g by mass of the pulp, 1.25% by mass of TEMPO, 12.5% by mass of sodium bromide, and 28.4% by mass of sodium hypochlorite were added in this order. The pulp was oxidized for 120 minutes at 20˚C while keeping the pH at 10.5 by dropping 0.5M sodium hydroxide using a pH-stat.

After the dropping ended, the resultant oxidized pulp was sufficiently washed with ion-exchanged water, dehydrated, and naturally dried in an atmosphere of 23˚C. 3.9 g of the oxidized pulp and 296.1g of ion-exchanged water were mixed for 120 minutes with a mixer (Vita-Mix-Blender ABSOLUTE, Osaka Chemical Co., Ltd.) for pulverizing fibers to obtain a suspension of cellulose fibers. The suspension had a solid content of 1.3% by mass.

Cellulose fibers in the suspension had an average fiber diameter of 3. 13 nm, an average aspect ratio of 238, the content of carboxyl groups of 1.23 mmol/g. In the suspension, there was no cellulose particle having a diameter of 1 $\mu$m or more. The suspension of cellulose fibers had a light transmittance of 97.1%, and a content of fine cellulose fibers of 90.9%.

[Preparation of a cellulose fiber suspension containing a cross-linking agent (gas barrier material)]

Then, to 100 g of the suspension of cellulose fibers, 1.3 g of aqueous solution of PAE diluted to 5% by mass (polyamide-epichlorohydrin resin, WS4030, Seiko PMC Corporation) was added as a cross-linking agent (5 parts by mass of the cross-linking agent to 100 parts by mass of solid cellulose fibers), and sufficiently stirred.

[Preparation of a gas barrier molded article]

The gas barrier material thus prepared was applied on a side of a poly(ethylene terephthalate) (PET) sheet (trade name: Lumirror, Toray Industries Inc., sheet thickness: 25 $\mu$m) as a substrate sheet with a bar coater (#50) and dried for 120 minutes at 23˚C to obtain a gas barrier laminate. It was measured in view of each item shown in Table A1.

In Table A1, a thickness of a cellulose fiber layer was calculated from a thickness of the wet film and a solid content of the cellulose fiber suspension assuming that the specified gravity of cellulose was 1.5. The value agreed with the film thickness measured with an atomic force microscope.

Example A2

A gas barrier material was prepared as in Example A1. A gas barrier laminate was also prepared as in Example A1. The gas barrier laminate was heat-treated for 30 minutes in a thermostat chamber set to 150˚C and allowed to cool for 2 hours or more at an ambient temperature. The heat-treated product was measured for properties shown in Table A1.

Example A3

A suspension of cellulose fibers was prepared as in Example A1.

Then, to 100 g of the suspension of cellulose fibers, 2.6 g of aqueous solution of glyoxal diluted to 5% by mass (Wako Pure Chemical Industries, Ltd.) was added as a cross-linking agent (10 parts by mass of the cross-linking agent to 100 parts by mass of solid cellulose fibers), and sufficiently stirred.

The gas barrier material thus prepared was applied on a side of a poly (ethylene terephthalate) (PET) sheet (trade name: Lumirror, Toray Industries Inc., sheet thickness: 25 $\mu$m) as a substrate sheet with a bar coater (#50) and dried for 120 minutes at 23˚C to obtain a gas barrier laminate. It was measured for properties shown in Table A1.

Example A4

A gas barrier material was prepared as in Example A3. A gas barrier laminate was also prepared as in Example A3. The gas barrier laminate was heat-treated for 30 minutes in a thermostat chamber set to 110˚C and allowed to cool for 2 hours or more at an ambient temperature. The heat-treated product was measured for properties shown in Table A1.

Example A5

A gas barrier material was prepared as in Example A3. A gas barrier laminate was also prepared as in Example A3. The gas barrier laminate was heat-treated for 30 minutes in a thermostat chamber set to 150˚C and allowed to cool for 2 hours or more at an ambient temperature. The product was measured in view of each item shown in Table A1.

Example A6

A gas barrier laminate was prepared as in Example A4, except that 2.6 g of aqueous solution of ADH (adipic acid dihydrazide, Otsuka Chemical Co., Ltd.) diluted to 5% by mass was added as a cross-linking agent (10 parts by mass of the cross-linking agent to 100 parts by mass of solid cellulose fibers). The gas barrier laminate was measured in view of each item shown in Table A1.

Example A7

A gas barrier laminate was prepared as in Example A4, except that 2.6 g of aqueous solution of polyisocyanate (product name: Duranate WB30-100, Asahi Kasei Chemicals Corporation) diluted to 5% by mass was added as a cross-linking agent (10 parts by mass of the cross-linking agent to 100 parts by mass of solid cellulose fibers). The gas barrier laminate was measured in view of each item shown in Table A1.

Example A8

A gas barrier laminate was prepared as in Example A4, except that 2.6 g of aqueous solution of acrylamide-acrylic acid hydrazide copolymer (product name: APA-P280, Otsuka Chemical Co., Ltd. ) diluted to 5% by mass was added as a cross-linking agent (10 parts by mass of the cross-linking agent to 100 parts by mass of solid cellulose fibers). The gas barrier laminate was measured in view of each item shown in Table A1.

Example A9

A gas barrier laminate was prepared as in Example A4, except that 2.6 g of aqueous solution of sorbitol polyglycidyl ether (product name: Denacol EX-614B, Nagase ChemteX Corporation) diluted to 5% by mass was added as a cross-linking agent (10 parts by mass of the cross-linking agent to 100 parts by mass of solid cellulose fibers). The gas barrier laminate was measured in view of each item shown in Table A1.

Example A10

A gas barrier laminate was prepared as in Example A4, except that 2.6 g of aqueous solution of polycarbodiimide (product name: E-02, Nisshinbo Chemical Inc.) diluted to 5% by mass was added as a cross-linking agent (10 parts by mass of the cross-linking agent to 100 parts by mass of solid cellulose fibers). The gas barrier laminate was measured for properties shown in Table A1.

Comparative Example A1

In Comparative Example A1, a PET film (thickness: 25 $\mu$m) was measured for properties shown in Table A2.

Comparative Example A2

In Comparative Example A2, a laminate was prepared as in Example A1, except that a cross-linking agent was not added. The laminate was measured for properties shown in Table A2.

From the comparison of Examples A1 to 10 to Comparative Example A2, the addition of a reactive cross-linking agent enhanced water vapor barrier properties. The heat treatment significantly enhanced oxygen barrier properties in the humidity (50%RH). As clearly shown particularly from the comparison of Example A1 (heating temperature: 23°C) to Example A2 (heating temperature: 150°C) and the comparison of Example A3 (heating temperature: 23°C) to Example A4 (heating temperature: 110°C), it is noted that the heat treatment enhanced moisture-proof properties, because the heat treatment facilitates formation of a cross-linking structure between cellulose fibers to enhance moisture-proof properties.

For the cross-linking agent, glyoxal, adipic acid dihydrazide (ADH), and the polyamide epichlorohydrin resin (PAE) exhibited higher effects. The reason of special high effects of cross-linking with a low molecular weight cross-linking agent as in Examples A4, A5, and A6 is unknown, but may be related to whether a cross-linking structure is uniformly formed throughout a cellulose fiber layer or not, in addition to reactivity of the cross-linking agent to cellulose fibers.

Table A1

| | | Example | | | | | | | | | |
|---|---|---|---|---|---|---|---|---|---|---|---|
| | | A1 | A2 | A3 | A4 | A5 | A6 | A7 | A8 | A9 | A10 |
| Substrate film | Kind | PET | PET | PET | PET | PET | PET | PET | PET | PET | PET |
| | Thickness($\mu$m) | 25 | 25 | 25 | 25 | 25 | 25 | 25 | 25 | 25 | 25 |
| Reactive cross-linking agent | | PAE | PAE | Glyoxal | Glyoxal | Glyoxal | ADH | WB30 | APA280 | EX-614B | E-02 |
| Thickness of callulose fiber layer($\mu$ m) | | 0.8 | 0.8 | 0.8 | 0.8 | 0.8 | 0.8 | 0.8 | 0.8 | 0.8 | 0.8 |
| Amount of cross-linking agent to 100 parts by mass of solid CSNF(parts by mass) | | 5 | 5 | 10 | 10 | 10 | 10 | 10 | 10 | 10 | 10 |
| Heating temperature ($^\circ$C) | | - | 150 | - | 110 | 150 | 110 | 110 | 110 | 110 | 110 |
| Oxygen barrier properties-50%RH ($\times$ $10^{-5}$ cm$^3$/m$^2$· day·Pa) | | 31.6 | 8.6 | 30.7 | 4.8 | 2.3 | 10.9 | 14.5 | 16.0 | 27.3 | 19.0 |
| Water vapor barrier properties (g/ m$^2$· day) | | 23.7 | 24.5 | 20.6 | 23.9 | 21.0 | 23.8 | 23.5 | 23.6 | 23,3 | 23.1 |

[Table A2]

| | | Comparative example | |
|---|---|---|---|
| | | A1 | A2 |
| Substrate film | Kind | PET | PET |
| | Thickness ($\mu$m) | 25 | 25 |
| Thickness or callulose fiber layer ($\mu$m) | | - | 0.8 |
| Oxygen barrier properties-0%RH ( $\times 10^{-5}$ cm$^3$/m$^2$· day·Pa) | | 60.0 | 0.112 |
| Oxygen barrier properties-50%RH ( $\times 10^{-5}$ cm$^3$/m$^2$. day·pa) | | 50.5 | 31.9 |
| Water vapor barrier properties (g/m$^2$. day) | | 25.2 | 24.6 |

PAE: polyamideamine-epichlorohydrin resin, product name: WS4030, Seiko PMC Corporation
ADH: adipic acid dihydrazide, Otsuka Chemical Co., Ltd.
WB30: polyisocyanate, product name: Duranate We30-100, Asahi Kasei Chemicals Corporation
APA280: acrylamide-acrylic acid hydrazide copolymer, Otsuka Chemical Co., Ltd.
EX-614B: sorbitol polyglycidyl ether, product name: Denacol EX-614B, Nagase ChemteX Corporation
E-02: polycarbodiimide, product name: E-02, Nisshinbo Chemical Inc.

Example A11

A suspension of cellulose fibers was prepared as in Example A1. A gas barrier laminate was prepared as in Example A2, except that 1.3 g of aqueous solution of glyoxal (Wako Pure Chemical Industries, Ltd.) diluted to 5% by mass was added (5 parts by mass of the cross-linking agent to 100 parts by mass of solid cellulose fibers). The gas barrier laminate was measured in view of each item shown in Table A3.

Example A12

A gas barrier laminate was prepared as in Example A11, except that 1.3 g of aqueous solution of glutaraldehyde (Wako Pure Chemical Industries, Ltd.) diluted to 5% by mass was added (5 parts by mass of the cross-linking agent to 100 parts by mass of solid cellulose fibers). The gas barrier laminate was measured in view of each item shown in Table A3.

Example A13

A gas barrier laminate was prepared as in Example A11, except that 1.3 g of aqueous solution of ADH (adipic acid dihydrazide, Otsuka Chemical Co., Ltd. ) diluted to 5% by mass was added (5 parts by mass of the cross-linking agent to 100 parts by mass of solid cellulose fibers). The gas barrier laminate was measured in view of each item shown in Table A3.

Example A14

A gas barrier laminate was prepared as in Example A11, except that 1.3 g of aqueous solution of citric acid (Wako Pure Chemical Industries, Ltd.) diluted to 5% by mass was added (5 parts by mass of the cross-linking agent to 100 parts by mass of solid cellulose fibers). The gas barrier laminate was measured in view of each item shown in Table A3.

Example A15

A gas barrier laminate was prepared as in Example A11, except that 1. 3 g of aqueous solution of acrylamide-acrylic acid hydrazide copolymer (product name: APA-P280, Otsuka Chemical Co., Ltd.) diluted to 5% by mass was added (5 parts by mass of the cross-linking agent to 100 parts by mass of solid cellulose fibers). The gas barrier laminate was measured in view of each item shown in Table A3.

Example A16

A gas barrier laminate was prepared as in Example A11, except that 1.3 g of aqueous solution of polycarbodiimide (product name: E-02, Nisshinbo Chemical Inc.) diluted to 5% by mass was added (5 parts by mass of the cross-linking agent to 100 parts by mass of solid cellulose fibers). The gas barrier laminate was measured in view of each item shown in Table A3.

Table A3

| | | Example | | | | | | Comparative example |
|---|---|---|---|---|---|---|---|---|
| | | A11 | A12 | A13 | A14 | A15 | A16 | A2 |
| Substrate film | Kind | PET | PET | PET | PET | PET | PET | PET |
| | Thickness ($\mu$m) | 25 | 25 | 25 | 25 | 25 | 25 | 25 |
| Reactive cross-linking agent(molecular weight) | | Glyoxal (58) | Glutarald ehyde (100) | ADH (174) | Citric acid(192) | APA280 (10000 <) | E-02 (10000 <) | - |
| Thickness of callulose fiber layer($\mu$ m) | | 0.8 | 0.8 | 0.8 | 0.8 | 0.8 | 0.8 | 0.8 |
| Amount of cross-linking agent to 100 parts by mass of solid CSNF (parts by mass) | | 5 | 5 | 5 | 5 | 5 | 5 | - |
| Heating temperature (˚C) | | 150 | 150 | 150 | 150 | 150 | 150 | - |
| Oxygen barrier properties-50%RH ($\times$ $10^{-5}$ $cm^3/m^2$·day·Pa) | | 2.1 | 5.0 | 15.1 | 2.0 | 16.0 | 19.0 | 31.9 |
| Water vapor barrier properties ($g/m^2$· day) | | 20.6 | 22.2 | 23.5 | 16.7 | 23.6 | 23.1 | 24.6 |

Examples A11 to A16 enhanced the oxygen barrier and the water vapor barrier properties more than Comparative Example A2 having no reactive cross-linking agent. Examples 11 to 14 using a cross-linking agent with low molecular weight showed higher effects of enhancing barrier properties. Glyoxal (Example A11 and citric acid (Example A14) were preferable cross-linking agents improving both oxygen barrier properties and water vapor barrier properties to a large extent.

Invention B6 will be described in detail with reference to the following Examples.

The following properties were measured as described above.

(1) An average fiber diameter, an average aspect ratio, and the content of carboxyl groups (mmol/g) of cellulose fibers were measured as described in Example A1.

(2) Light transmittance

Using a spectrophotometer (UV-2550, Shimadzu Corporation), a suspension of 0. 1% by mass concentration was measured for light transmittance (%) at a wavelength of 660 nm with an optical path length of 1 cm.

(3) Mass percentage of fine cellulose fibers in a cellulose fiber suspension (a content of fine cellulose fibers) (%)

0.1% by mass suspension of cellulose fibers was prepared and measured for solid content. The suspension was suction-filtered through a 16 $\mu$m-mesh glass filter (25G P16, Shibata Scientific Technology Ltd.). The filtrate was measured for solid content. The solid content of the filtrate (Con1) was divided by the solid content of the suspension before filtration (Con2). A value (Con1/Con2) was considered as the content of fine cellulose fibers (%).

(4) A suspension was observed as described in Example A1.

(5) Water content (%) of a film (cellulose fiber layer)

First, a film was measured for weight (weight "a" ). The film was dried for 24 hours at 105˚C under a reduced pressure of 360 mmHg, and then measured for weight (dry weight "b") . A water content was calculated as a percentage (%) of an amount of water in the film (a-b) to the weight of the film (a): ((a-b)/a×100). The water content after the drying treatment with heat is that after 3 minutes has passed since taking-out from a heat-drying oven.

(6) Equilibrium water content (%) of a film (cellulose fiber layer)

The equilibrium water content was determined for a film after it was subjected to the drying treatment with heat and stored for 24 hours or more in an environment of 23˚C and 60%RH.

(7) Oxygen permeability (Equal pressure method) ($cm^3/m^2 \cdot day \cdot Pa$)

Oxygen permeability was measured as described in Example A1.

For some Examples and Comparative Examples, oxygen permeability was measured under conditions of 23˚C and 0% RH, and more specifically, in an atmosphere of oxygen gas of 23˚C and 0% RH and nitrogen gas (carrier gas) of 23˚C and a humidity of 0%. For some Examples and Comparative Examples, oxygen permeability was measured under conditions of 23˚C and 70% RH, and more specifically, in an atmosphere of oxygen gas of 23˚C and 70% RH and nitrogen gas (carrier gas) of 23˚C and a humidity of 70%.

Oxygen permeability was measured with a film after it was formed and stored for 24 hours or more in an environment of 23˚C and 50%RH.

Example B1

(1) A starting material, a catalyst, an oxidant, and a cooxidant for preparation of a cellulose fiber suspension were same to those described in Example A1.

(2) Procedure of Preparation

100 g of the bleached softwood kraft pulp was sufficiently stirred in 9900 g of ion-exchanged water. To this, per 100 g by mass of the pulp, 1.25% by mass of TEMPO, 12.5% by mass of sodium bromide, and 28.4% by mass of sodium hypochlorite were added in this order. The pulp was oxidized for 120 minutes while keeping the pH at 10.5 by dropping 0.5M sodium hydroxide using a pH-stat.

After the dropping ended, the resultant oxidized pulp was sufficiently washed with ion-exchanged water and dehydrated. Then, 3.9 g of the oxidized pulp and 296.1g of ion-exchanged water were mixed for 120 minutes with a mixer (Vita-Mix-Blender ABSOLUTE, Osaka Chemical Co., Ltd.) for pulverizing fibers to obtain a suspension of cellulose fibers. Cellulose fibers had an average fiber diameter of 3.1 nm, an average aspect ratio of 240, the content of carboxyl groups of 1.2 mmol/g. In the suspension, there was no cellulose particle having a diameter of 1 µm or more. The suspension had a light transmittance of 97.1%, and a content of fine cellulose fibers of 90.9%.

To 100 g of the suspension of cellulose fibers, 30 g of ion-exchanged water and 39 g of isopropanol were added and sufficiently stirred. The resultant suspension of cellulose fibers had a solid content of 0.77%,

[Formation of a film material]

The suspension of cellulose fibers thus prepared was applied on a side of a poly(ethylene terephthalate) (PET) sheet (trade name: Lumirror, Toray Industries Inc., sheet thickness: 25 µm) as a substrate sheet with a bar coater (#50).

[Step of drying with heat]

The coated sheet was dried for 120 minutes at a room temperature (23˚C), and further for 30 minutes at 110˚C in an electric drying oven (natural convection type) to obtain a molded composite having a layered structure. A film (cellulose fiber layer) was measured for water content before and after the step of drying with heat, equilibrium water content at 23˚C and 60%RH, and oxygen permeability. Results are shown in Table B1.

In Table B1, a thickness of a cellulose fiber layer was calculated from a thickness of the wet film and a solid content of the cellulose fiber suspension assuming that the specified gravity of cellulose was 1.5. The value agreed with the film thickness measured with an atomic force microscope.

Examples B2 to B4

The same suspension of cellulose fibers as of Example B1 was applied on a side of a poly(ethylene terephthalate) (PET) sheet (trade name: Lumirror, Toray Industries Inc. , sheet thickness: 25 µm) as a substrate sheet with a bar coater (#50).

The coated sheet was dried for 120 minutes at a room temperature (23˚C) as in Example B1. For respective Examples B2 to B4, the sheet was further dried in an electric drying oven (natural convection type) for a time and at a temperature as shown in Table B1 to obtain a molded composite having a layered structure. A cellulose fiber layer was measured for water content before and after the step of drying with heat, equilibrium water content at 23°C and 60%RH, and oxygen permeability. Results are shown in Table B1. Examples B5 and B6

The same suspension of cellulose fibers as of Example B1 was applied on a side of a poly(ethylene terephthalate) (PET) sheet (trade name: Lumirror, Toray Industries Inc., sheet thickness: 25 μm) as a substrate sheet with a bar coater (#50).

For respective Examples B5 and B6, during the film material of the suspension of cellulose fibers was wet and fluent (within 5 minutes after application), the sheet was placed in an electric drying oven (natural convection type) and dried for a time and at a temperature as shown in Table B1 to obtain a molded composite having a layered structure. A cellulose fiber layer was measured for water content before and after the step of drying with heat, equilibrium water content at 23°C and 60%RH, and oxygen permeability. Results are shown in Table B1.

Comparative Example B1

The same suspension of cellulose fibers as of Example B1 was applied on a side of a poly(ethylene terephthalate) (PET) sheet (trade name: Lumirror, Toray Industries Inc., sheet thickness: 25 μm) as a substrate sheet with a bar coater (#50).

The sheet was dried for 120 minutes at a room temperature (23°C) as in Example B1, but without the step of drying with heat, to obtain a molded composite having a layered structure. A cellulose fiber layer was measured for water content after dried for 120 minutes at a room temperature, equilibrium water content at 23°C and 60%RH, and oxygen permeability. Results are shown in Table B1.

Comparative Examples B2 and B3

10 g of carboxymethylcellulose sodium salt (CMC) (trade name: HE1500F, Daicel Chemical Industries, Ltd.), 90 g of ion-exchanged water, and 30 g of isopropanol were mixed to obtain a 0.7% by mass solution of CMC.

The 0.7% by mass solution of CMC was applied as in Example B1, on a side of a poly(ethylene terephthalate) (PET) sheet (trade name: Lumirror, Toray Industries Inc., sheet thickness: 25 μm) as a substrate sheet with a bar coater (#50).

In Comparative Example B2, the sheet was dried for 120 minutes at a room temperature (23°C), but without the step of drying with heat, to obtain a molded composite having a layered structure. A measured value of oxygen permeability is shown in Table B1.

In Comparative Example B3 , the molded composite prepared in Comparative Example 2 was dried with heat for 30 minutes at 110°C in an electric drying oven (natural convection type) to obtain a molded composite having a layered structure. A measured value of oxygen permeability is shown in Table B1.

Comparative Example B4

A measured value of oxygen permeability of a poly (ethylene terephthalate) (PET) sheet (trade name: Lumirror, Toray Industries Inc., sheet thickness: 25 μm) is shown in Table B1.

Table B1

| | | Example B1 | Example B2 | Example B3 | Example B4 | Example B5 | Example B6 | Comparative example B1 | Comparative example B2 | Comparative example B3 | Comparative example B4 |
|---|---|---|---|---|---|---|---|---|---|---|---|
| Substrate | | PET film (25 $\mu$m) | | | | | | | | | |
| Cellulose fiber | Average fiber diameter(nm) | 3.1 | 3.1 | 3.1 | 3.1 | 3.1 | 3.1 | 3.1 | — | — | — |
| | Average aspect ratio | 240 | 240 | 240 | 240 | 240 | 240 | 240 | — | — | — |
| | Content of carboxyl group (mmol/g) | 1.2 | 1.2 | 1.2 | 1.2 | 1.2 | 1.2 | 1.2 | 5.4 | 5.4 | — |
| Drying time at 23°C after coating(min) | | 120 | 120 | 120 | 120 | – | – | 120 | 120 | 120 | – |
| Water content of cellulose fiber before drying with heat (%) | | 23.0 | 23.0 | 23.0 | 23.0 | 99.3 | 99.3 | 23.0 | – | – | – |
| Drying with heat (°C × min) | | 110×30 | 150×30 | 50×30 | 110×5 | 150×30 | 110×30 | – | – | 110×30 | – |
| Water content of cellulose fiber layer after drying with heat(%) | | 13.6 | 1.3 | 17.9 | 18.8 | 8.7 | 13.9 | – | – | – | – |
| Equilibrium water content at 23°C and 60% RH(%) | | 23.0 | 23.0 | 23.0 | 23.0 | 23.0 | 23.0 | 23.0 | — | — | — |
| Water content after drying with heat/ equilibrium water content × 100(%) | | 59.1 | 5.65 | 77.8 | 81.7 | 37.8 | 60.4 | – | — | — | — |
| Thickness of cellulose fiber layer(nm) | | 400 | 400 | 400 | 400 | 400 | 400 | 400 | 400 | 400 | – |
| Oxygen permeability [※1] ($\times 10^{-5}$ cm$^3$/m$^2$·day·Pa) | | 0.061 | 0.039 | 0.049 | 0.042 | 0.064 | 0.050 | 0.068 | 0.15 | 0.91 | 60.0 |
| Oxygen permeability [※2] ($\times 10^{-5}$ cm$^3$/m$^2$·day·Pa) | | 20.2 | 6.9 | 23.5 | 22.4 | 13.5 | 22.1 | 32.0 | 44.2 | 43.5 | 50.5 |

※1 An oxygen permeability was measured under conditions of 23° C and 0% RH.
※2 An oxygen permeability was measured under conditions of 23° C and 50% RH.

EP 2 371 892 A1

As clearly shown from Examples B1 to B6 and Comparative Examples B1 and B4, a film prepared by the method of the present invention had better oxygen barrier properties, and in particular better oxygen barrier properties measured under 50%RH than that prepared without drying with heat (Comparative Example B1). The oxygen barrier properties were evidently maintained even under high humidity environment by way of the treatment of drying with heat. Examples B2 and B5, in which a film was dried with heat to a water content of 50% or less of the equilibrium water content at 23°C and 60%RH, achieved higher oxygen barrier properties measured at 50%RH. Example B2, in which a film was dried with heat to a water content of 10% or less of the equilibrium water content at 23°C and 60%RH, achieved much higher oxygen barrier properties measured at 0%RH, and 50%RH.

Examples B1 and B2, which include step of keeping a film material of a suspension containing cellulose fibers in a dry state of reduced water content to the equilibrium water content at ambient temperature and ambient humidity between steps of forming the film material and of drying with heat, achieved oxygen barrier properties as that achieved by Examples B5 and B6, which did not include the step of keeping a film material in a dry state of reduced water content to the equilibrium water content at ambient temperature and ambient humidity. The step of keeping a film material in a dry state to the equilibrium water content at ambient temperature and ambient humidity enables to store the film material as an intermediate and to subject the film material to an intended process such as printing and layering with a protective layer.

Comparative Examples B2 and B3 provided a film using an aqueous solution of CMC-Na that has a similar structure of a cellulose molecule with a carboxyl group. In these two Examples, enhancement of oxygen barrier properties at 50%RH by heating could not be observed. Therefore, it is thought that in the method of producing a film of the present invention, oxygen barrier properties under high humidity conditions achieved by heating originate at a structural feature of cellulose fibers used. For example, cellulose fibers used in the present invention may hold a compact structure even in a humid environment of 50%RH via bonding or cross-linking of aldehyde groups on the surface to hydroxy groups in cellulose fibers by heating.

Example B7

100 g of the bleached softwood kraft pulp was sufficiently stirred in 9900 g of ion-exchanged water. To this, per 100 g by mass of the pulp, 1.25% by mass of TEMPO, 12.5% by mass of sodium bromide, and 28.4% by mass of sodium hypochlorite were added in this order. The pulp was oxidized for 120 minutes while keeping the pH at 10.5 by dropping 0.5M sodium hydroxide using a pH-stat.

After the dropping ended, the resultant oxidized pulp was sufficiently washed with ion-exchanged water and dehydrated. 3.9 g of the oxidized pulp and 296.1 g of ion-exchanged water were mixed for 10 minutes with a mixer (Vita-Mix-Blender ABSOLUTE, Osaka Chemical Co., Ltd.) for pulverizing fibers to obtain a suspension of cellulose fibers. Cellulose fibers had an average fiber diameter of 3.3 nm, an average aspect ratio of 305, the content of carboxyl groups of 1.2 mmol/g. In the suspension, there was no cellulose particle having a diameter of 1 $\mu$m or more. The suspension had a light transmittance of 95.5%, a content of fine cellulose fibers of 100%, and a solid content of 1.3%.

The suspension of cellulose fibers thus prepared was applied on a side of a poly(ethylene terephthalate) (PET) sheet (trade name: Lumirror, Toray Industries Inc., sheet thickness: 25 $\mu$m) as a substrate sheet with a bar coater (#50).

The coated sheet was dried for 120 minutes at a room temperature (23°C), and further for 30 minutes at 110°C in an electric drying oven (natural convection type) to obtain a molded composite having a layered structure. A cellulose fiber layer was measured for water content of before and after the step of drying with heat, equilibrium water content at 23°C and 60%RH, and oxygen permeability. Results are shown in Table B2 .

In Table B2, a thickness of a cellulose fiber layer was calculated from a thickness of the wet film and a solid content of the cellulose fiber suspension assuming that the specified gravity of cellulose fibers was 1.5. The value agreed with the film thickness measured with an atomic force microscope.

Example B8

A suspension of cellulose fibers was prepared as in Example B7, except that sodium hypochlorite was added in an amount of 7.1% by mass. A molded composite was also prepared as in Example B7 . A cellulose fiber layer was measured for water content of before and after the step of drying with heat, equilibrium water content at 23°C and 60%RH, and oxygen permeability. Results are shown in Table B2.

Example B9

A suspension of cellulose fibers was prepared as in Example B7, except that sodium hypochlorite was added in an amount of 14.2% by mass. A molded composite was also prepared as in Example B7 . A cellulose fiber layer was measured for water content of before and after the step of drying with heat, equilibrium water content at 23°C and 60%RH, and oxygen permeability. Results are shown in Table B2.

Example B10

A suspension of cellulose fibers was prepared as in Example B7, except that sodium hypochlorite was added in an amount of 56.4% by mass. A molded composite was also prepared as in Example B7. A cellulose fiber layer was measured for water content of before and after the step of drying with heat, equilibrium water content at 23°C and 60%RH, and oxygen permeability. Results are shown in Table 2.

[Table B2]

| | | | Example B7 | Example B8 | Example B9 | Example B10 |
|---|---|---|---|---|---|---|
| Substrate | | | PET film (25 $\mu$m) | | | |
| Cellulose fiber | Average fiber diameter(nm) | | 3.25 | 7.26 | 6.09 | 3.62 |
| | Average aspect ratio | | 305 | 290 | 330 | 235 |
| | Content of carboxyl group (mmol/g) | | 1.2 | 0.6 | 1.0 | 1.4 |
| Drying treatment(°C × min) | | | 23 × 120 | 23 × 120 | 23 × 120 | 23 × 120 |
| Water content of cellulose fiber layer before drying with heat (%) | | | 23.8 | 23.8 | 23.8 | 23.8 |
| Heating treatment (°C × min) | | | 110 × 30 | 110 × 30 | 110 × 30 | 110 × 30 |
| Water content of cellulose fiber after drying with heat (%) | | | 6.8 | 18.1 | 8.0 | 4.9 |
| Equilibrium water content at 23°C and 60%RH (%) | | | 23.8 | 23.8 | 23.8 | 23.8 |
| Water content after heating with heat / equilibrium water content × 100(%) | | | 28.6 | 76.1 | 33.6 | 20.6 |
| Thickness of cellulose fiber layer (nm) | | | 800 | 800 | 800 | 800 |
| Oxygen permeability [※3] ($\times 10^{-5}$ cm$^3$/m$^2$·day·Pa) | | | 16.1 | 16.0 | 11.6 | 16.6 |

※3 An oxygen permeability was measured under condition of 23°C and 50%RH.

Examples B7 to B10 used suspensions of different cellulose fibers in fiber diameter and content of carboxyl groups to prepare a film. Results show all of the films prepared by the method of the present invention could achieve high oxygen barrier properties even though celluloses composing the cellulose fibers used had different contents of carboxyl groups and different average aspect ratios.

Example B11

A suspension of cellulose fibers was prepared as in Example B10.
The suspension of cellulose fibers thus prepared was applied on a side of a poly(ethylene terephthalate) (PET) sheet (trade name: Lumirror, Toray Industries Inc., sheet thickness: 25 μm) as a substrate sheet with a bar coater (#50).
The coated sheet was dried for 120 minutes at a room temperature (23°C), and further for 30 minutes at 150°C in an electric drying oven (natural convection type) to obtain a molded composite having a layered structure. A measured oxygen permeability is shown in Table B3.
In Table B3 , a thickness of a cellulose fiber layer was calculated from a thickness of the wet film and a solid content of the cellulose fiber suspension assuming that the specified gravity of cellulose fibers was 1.5. The value agreed with the film thickness measured with an atomic force microscope.

Example B12

A molded composite was prepared as in Example B11, except that drying with heat in an electric drying oven (natural convection type) was for 60 minutes at 150°C. A measured oxygen permeability is shown in Table B3.

Example B13

A molded composite was prepared as in Example B11, except that drying with heat in an electric drying oven (natural convection type) was for 180 minutes at 150°C. A measured oxygen permeability is shown in Table B3.

Example B14

A suspension of cellulose fibers was prepared as in Example B7, except that mixing with a mixer (Vita-Mix-Blender ABSOLUTE, Osaka Chemical Co., Ltd.) was for 120 minutes. A molded composite was prepared as in Example B11. A measured oxygen permeability is shown in Table B3.

Example B15

A suspension of cellulose fibers was prepared as in Example B11, except that mixing with a mixer (Vita-Mix-Blender ABSOLUTE, Osaka Chemical Co., Ltd.) was for 120 minutes. A molded composite was also prepared as in Example B11. A measured oxygen permeability is shown in Table B3.

Example B16

A suspension of cellulose fibers was prepared as in Example B9, except that mixing with a mixer (Vita-Mix-Blender ABSOLUTE, Osaka Chemical Co., Ltd.) was for 120 minutes. A molded composite was prepared as in Example B11. A measured oxygen permeability is shown in Table B3.

Example B17

A suspension of cellulose fibers was prepared as in Example B7, and a molded composite was prepared as in Example B11. A measured oxygen permeability is shown in Table B3.

Comparative Examples B5, B6, and B7

Molded composites were prepared as in Examples B14, B16, and B17, respectively, except that drying with heat was not conducted. Measured values of oxygen permeability are shown in Table B3.

Table B3

| | | Example B11 | Example B12 | Example B13 | Comparative example B5 | Example B14 | Example B15 | Comparative example B6 | Example B16 | Comparative example B7 | Example B17 |
|---|---|---|---|---|---|---|---|---|---|---|---|
| Substrate | | PET film (25 μm) | | | | | | | | | |
| Cellulose fiber | Average fiber diameter (nm) | 4.0 | 4.0 | 4.0 | 4 | 4 | 4 | 4 | 4 | 4 | 4 |
| | Average fiber length (nm) | 940.0 | 940.0 | 940.0 | 960 | 960 | 720 | 880 | 880 | 1220 | 1220 |
| | Average aspect ratio | 235 | 235 | 235 | 240 | 240 | 180 | 220 | 220 | 305 | 305 |
| | Content of carboxyl group (mmol/g) | 1.4 | 1.4 | 1.4 | 1.2 | 1.2 | 1.4 | 1.0 | 1.0 | 1.2 | 1.2 |
| Drying time at 23°C after coating (min) | | 120 | 120 | 120 | 120 | 120 | 120 | 120 | 120 | 120 | 120 |
| Drying with heat (°C × min) | | 150×30 | 150×60 | 150×180 | — | 150×30 | 150×30 | — | 150×30 | — | 150×30 |
| Thickness of cellulose fiber layer (nm) | | 800 | 800 | 800 | 800 | 800 | 800 | 800 | 800 | 800 | 800 |
| Oxygen permeability ※1 ($\times 10^{-5}$ cm$^3$/m$^2$·day·Pa) | | 0.04 | 0.04 | 0.04 | 0.060 | 0.04 | 0.04 | 0.07 | 0.04 | 0.08 | 0.04 |
| Oxygen permeability ※2 ($\times 10^{-5}$ cm$^3$/m$^2$·day·Pa) | | 2.0 | 0.6 | 1.0 | 25.6 | 5.4 | 2.5 | 25.4 | 3.7 | 30.7 | 6.2 |
| Oxygen permeability ※3 ($\times 10^{-5}$ cm$^3$/m$^2$·day·Pa) | | 38.6 | 28.6 | 31.5 | — | — | — | — | — | — | — |

※1 Oxygen permeability was measured under condition of 23°C and 0% RH.
※2 Oxygen permeability was measured under condition of 23°C and 50% RH.
※3 Oxygen permeability was measured under condition of 23°C and 70% RH.

Examples B11 to B13 produced films with different times of drying with heat. Films of these Examples had high oxygen barrier properties. The film of Example B12 that employed heating for 60 minutes at 150˚C exhibited the highest oxygen barrier properties. From the result, oxygen barrier properties can be increased by controlling dehydration and damage, due to heating, of the film.

Examples B11 and B14 to B17 show films prepared from suspensions of cellulose fibers having different fiber diameters and different contents of carboxyl groups. These films showed increased oxygen barrier properties, in particular oxygen barrier properties at 50%RH than that of films prepared without heating (Comparative Examples B5 to B7). Examples B11, B14, B15, B16, and B17, which used cellulose fibers having the content of carboxyl groups of 1. 0 or more and an average aspect ratio of 350 or less, particularly achieved high oxygen barrier properties. Examples B11 and B15, which used cellulose fibers having the content of carboxyl groups of 1.4 and average aspect ratios of 235 and 180, respectively, achieved much higher oxygen barrier properties.

C7 and C8 will be described in detail with reference to the following Examples.

The following properties were measured as described in Example A1.

(1) Average fiber diameter and average aspect ratio of cellulose fibers
(2) Content of carboxyl groups of cellulose fibers (mmol/g)
(3) Light transmittance
(4) Mass percentage of fine cellulose fibers in a cellulose fiber suspension (content of fine cellulose fibers) (%)
(5) Observation of a cellulose fiber suspension
(6) Water vapor permeability (g/m$^2$·day)
(7) Oxygen permeability (Equal pressure method) (cm$^3$/m$^2$·day·pa)

Oxygen permeability was measured under conditions of 23˚C and 50%RH with an oxygen permeability tester OX-TRAN2/21 (model ML&SL, MOCON, Inc.) in accordance with the method of Risk7126-2, Appendix A, and more specifically, in an atmosphere of oxygen gas of 23˚C and 50% RH and nitrogen gas (carrier gas) of 23˚C and a humidity of 50%. The oxygen permeability was determined by having stored the film in an environment of 23˚C and 50%RH, for 24 hours or more after the formation thereof.

Examples C1 to C3

(1) A starting material, a catalyst, an oxidant, and a cooxidant for preparation of a cellulose fiber suspension were same to those described in Example A1.
(2) Procedure of Preparation

100 g of the bleached softwood kraft pulp was sufficiently stirred in 9900 g of ion-exchanged water. To this, per 100 g by mass of the pulp, 1.25% by mass of TEMPO, 12.5% by mass of sodium bromide, and 28.4% by mass of sodium hypochlorite were added in this order. The pulp was oxidized for 120 minutes while keeping the pH at 10.5 by dropping 0.5M sodium hydroxide using a pH-stat.

After the dropping ended, the resultant oxidized pulp was sufficiently washed with ion-exchanged water and dehydrated. Then, 3.9 g of the oxidized pulp and 296.1g of ion-exchanged water were mixed for 120 minutes with a mixer (Vita-Mix-Blender ABSOLUTE, Osaka Chemical Co., Ltd.) for pulverizing fibers to obtain a suspension of cellulose fibers. The suspension had a solid content of 1.3% by mass. Cellulose fibers had an average fiber diameter of 3.1 nm, an average aspect ratio of 240, the content of carboxyl groups of 1.2 mmol/g. In the suspension, there was no cellulose particle having a diameter of 1 μm or more. The suspension of cellulose fibers had a light transmittance of 97.1%, and a content of fine cellulose fibers of 90.9%.

[Preparation of a film material]

The suspension of cellulose fibers thus prepared was applied on a side of a poly (ethylene terephthalate) (PET) sheet (trade name: Lumirror, Toray Industries Inc. , sheet thickness: 25 μm) as a substrate sheet with a bar coater (#50).

[Step of attaching an aqueous solution of a cross-linking agent]

On the film material thus prepared in the previous step was sprayed an aqueous solution of adipic acid dihydrazide of a concentration as shown in Table C1. The aqueous solution was sprayed in such amount as that the film material contained about 0.06 g of cross-linking agent (dry mass) per 500 cm$^2$ of the film material. In Examples C1 to C2, each aqueous solution of a cross-linking agent was sprayed during a cellulose fiber layer was still wet (within three minutes from the application) . In Example C3, an aqueous solution of a cross-linking agent was sprayed after dried for 120 minutes at an ambient temperature (23˚C) .

[Step of cross-linking]

A sheet sprayed with an aqueous solution of a cross-linking agent was dried for 120 minutes at a room temperature (23˚C). In Examples C2 and C3, each sheet was heat-treated for 30 minutes at 110˚C in a thermostat chamber and allowed to cool to obtain each film. In each film, a thickness of a cellulose fiber layer was 800 nm. The value was calculated from a thickness of the wet film and a solid content of the cellulose fiber suspension assuming that the specified gravity of cellulose was 1.5. The value agreed with the film thickness measured with an atomic force microscope. Measured values of water vapor permeability are shown in Table C1.

Examples C4 to C6

As in Examples C1 to C3, film materials were prepared, subjected to steps of attaching an aqueous glyoxal solution and heating at conditions as shown in Table C1 to obtain respective films. Measured values of water vapor permeability are shown in Table C1.

Examples C7 to C9

As in Examples C1 to C3, film materials were prepared, subjected to steps of attaching an aqueous butanetetracarboxylic acid solution and heating at conditions as shown in Table C1 to obtain films. Measured values of water vapor permeability are shown in Table C1.

Examples C10 to C13

As in Examples C1 to C2, film materials were prepared, and while a layer of cellulose fibers was wet (within three minutes), subjected to steps of attaching an aqueous solution of a cross-linking agent and heating at conditions as shown in Table C1 to obtain films. Measured values of water vapor permeability thereof are shown in Table C1.

Comparative Example C1

A PET sheet (thickness: 25 $\mu$m) used as a substrate was measured for water vapor permeability. The result is shown in Table C2.

Comparative Example C2

A film material was prepared as in Example C1, and without subjected to step of attaching an aqueous solution of a cross-linking agent, dried for 120 minutes at an ambient temperature (23˚C) to obtain a film. Measured values of water vapor permeability thereof are shown in Table C2.

Table C1

| | | Example | | | Example | | | Example | | | Example | | Example | |
|---|---|---|---|---|---|---|---|---|---|---|---|---|---|---|
| | | C1 | C2 | C3 | C4 | C5 | C6 | C7 | C8 | C9 | C10 | C11 | C12 | C13 |
| Substrate (thickness 25 $\mu$m) | | PET | PET | PET | PET | PET | PET | PET | PET | PET | PET | PET | PET | PET |
| Film (thickness 800nm) | | CSNF | CSNF | CSNF | CSNF | CSNF | CSNF | CSNF | CSNF | CSNF | CSNF | CSNF | CSNF | CSNF |
| Drying | 23°C, min | — | — | 120 | — | — | 120 | — | — | 120 | 120 | 120 | 120 | 120 |
| Attachment of cross-linking agent | Kind | ADH | ADH | ADH | Gly | Gly | Gy | BTC | BTC | BTC | APA280 | APA280 | PAE | PAE |
| | Concentration of aqueous solution (mass%) | 5 | 5 | 5 | 5 | 5 | 5 | 5 | 5 | 5 | 5 | 5 | 5 | 5 |
| Crosslinking process | 23°C, min | 120 | 120 | 120 | 120 | 120 | 120 | 120 | 120 | 120 | 120 | 120 | 120 | 120 |
| | 110°C, min | — | 30 | 30 | — | 30 | 30 | — | 30 | 30 | — | 30 | — | 30 |
| Water vapor permeability (g/m²·day) | | 15.6 | 16.3 | 17.0 | 19.6 | 19.1 | 17.3 | 16.5 | 17.0 | 19.7 | 22.3 | 22.3 | 22.3 | 23.5 |

[Table C2]

|  |  | Comparative example | |
|---|---|---|---|
|  |  | C1 | C2 |
| Substrate (thickness 25 μm) | | PET | PET |
| Film (thickness 800nm) | | — | CSNF |
| Cross-linking agent | Kind | — | — |
| Cross-linking process | 23°C, min | — | — |
|  | 110°C, min | — | — |
| Water vapor permeability ($g/m^2 \cdot day$) | | 25.2 | 24.5 |

CSNF: cellulose fibers prepared in Example A1
ADH: adipic acid dihydrazide, Otsuka Chemical Co., Ltd. (molecular weight: 174)
Gly: glyoxal, Wako Pure Chemical Industries, Ltd. (molecular weight: 58)
BTC: butanetetracarboxylic acid, Wako Pure Chemical Industries, Ltd. (molecular weight: 234)
APA-P280: acrylamide-acrylic acid hydrazide copolymer, Otsuka Chemical Co., Ltd. (molecular weight: about 20,000, see, a manufacturer's catalog)
PAE: product name WS4030, polyamide epichlorohydrin resin, Seiko Pmc Corporation (molecular weight: several hundreds of thousands)

As shown in Tables C1 and C2, Examples C1 to C11, which comprised attachment of an aqueous solution of a cross-linking agent, achieved higher water vapor barrier properties than that of Comparative Examples C1 and C2. This indicates that an attached cross-linking agent penetrated among fine cellulose fibers and formed a cross-linking structure. Particularly in Examples C1 to C9, which comprised application of an aqueous solution of a cross-linking agent having low molecular weight, achieved a water vapor permeability lower than 20 $g/m^2 \cdot day$. The application of a cross-linking agent having a low molecular weight provides improved water vapor barrier properties in comparison with Examples C10 to C11 using an aqueous solution of a resin cross-linking agent for application. It is the reason that such a cross-linking agent having a low molecular weight has a higher ability to penetrate into fine cellulose fibers and easily form a cross-linking structure, in comparison with a high molecular weight-having cross-linking agent.
Examples C3, C6, and C9 each prepared a film by drying a coated suspension of cellulose fibers and then attaching an aqueous solution of a cross-linking agent. As clearly shown in Table C1, also in Examples C3, C6, and C9, water vapor barrier properties were enhanced. These results indicate that since a cross-linking agent was attached in a state of aqueous solution, a dried layer of cellulose fibers was swelled with water of the solution and allowed the cross-linking agent to penetrate.
Examples C1 to C9 showed high water vapor barrier properties. These results also indicate that a process of production including forming a film with a suspension of cellulose fibers and then attaching a cross-linking agent is preferred for producing a film or the like having water vapor barrier properties.

Example C14

A film was prepared as in Example C4, except that step of cross-linking was performed by heat-treating for 30 minutes at 150˚C in a thermostat chamber. The film was measured for water vapor permeability and oxygen permeability. Results are shown in Table C3.

Example C15

A film was prepared as in Example C14, except that glutaraldehyde (Wako Pure Chemical Industries, Ltd.) was used as a cross-linking agent. The film was measured for water vapor permeability and oxygen permeability. Results are shown in Table C3.

Example C16

A film was prepared as in Example C14, except that ADH (adipic acid dihydrazide, Otsuka Chemical Co., Ltd.) was used as a cross-linking agent. The film was measured for water vapor permeability and oxygen permeability. Results are shown in Table C3.

Example C17

A film was prepared as in Example C14, except that BTC (butanetetracarboxylic Acid, Wako Pure Chemical Industries, Ltd. ) was used as a cross-linking agent. The film was measured for water vapor permeability and oxygen permeability. Results are shown in Table C3.

Example C18

A film was prepared as in Example C14, except that citric acid (Wako Pure Chemical Industries, Ltd.) was used as a cross-linking agent. The film was measured for water vapor permeability and oxygen permeability. Results are shown in Table C3.

Example C19

A film was prepared as in Example C14, except that APA-P280 (acrylamide-acrylic acid hydrazide copolymer, Otsuka Chemical Co., Ltd.) was used as a cross-linking agent. The film was measured for water vapor permeability and oxygen permeability. Results are shown in Table C3.

Example C20

A film was prepared as in Example C14, except that E-02 (polycarbodiimide, Nisshinbo Chemical Inc.) was used as a cross-linking agent. The film was measured for water vapor permeability and oxygen permeability. Results are shown in Table C3.

Table C3

| | | Example | | | | | | | Comparative example |
|---|---|---|---|---|---|---|---|---|---|
| | | C14 | C15 | C16 | C17 | C18 | C19 | C20 | C2 |
| Substrate film | Kind | PET | PET | PET | PET | PET | PET | PET | PET |
| | Thickness (μm) | 25 | 25 | 25 | 25 | 25 | 25 | 25 | 25 |
| Reactive cross-linking agent(molecular weight) | | Glyoxal (58) | glutaraldehyde (100) | ADH (174) | BTC (234) | Citric acid (192) | APA280 (10000 <) | E-20 (10000 <) | - |
| Thickness of cellulose fiber layer(μm) | | 0.8 | 0.8 | 0.8 | 0,8 | 0.8 | 0.8 | 0.8 | 0.8 |

(continued)

| | Example | | | | | | | Comparative example |
|---|---|---|---|---|---|---|---|---|
| | C14 | C15 | C16 | C17 | C18 | C19 | C20 | C2 |
| Concentration of aqueous solution of cross-linking agent attached (%) | 5 | 5 | 5 | 5 | 5 | 5 | 5 | - |
| Heating temperature (°C) | 150 | 150 | 150 | 150 | 150 | 150 | 150 | - |
| Oxygen permeability-50%RH ($\times$ 10$^{-5}$ cm$^3$/m$^2$·day·Pa) | 3.8 | 4.4 | 5.0 | 2.4 | 7.0 | 9.8 | 29.0 | 31.9 |
| Water vapor permeability (g/ m$^2$· day) | 14.9 | 23.5 | 23.3 | 17.7 | 16.8 | 24.1 | 23.7 | 24.5 |

Examples C14 to C20 achieved higher oxygen barrier properties and water vapor barrier properties than that in Comparative Example C2, which did not include attachment of a reactive cross-linking agent. Particularly in Examples C14 to C18, which each used a cross-linking agent having low molecular weight, higher effects of enhancing barrier properties were shown. For water vapor barrier properties, Examples C17 and C18, which each used a carboxyl group as a reactive functional group of a reactive cross-linking agent, and Example C14, which used an aldehyde group, showed significant enhancement. For oxygen barrier properties, Examples C17 and C18, which each used a carboxyl group as a reactive functional group of a reactive cross-linking agent, Example C14, which used an aldehyde group, and Example C16, which used a hydrazide group, showed significant enhancement.

D9, D10, D11, and D12 will be described in detail with reference to the following Examples.

The following properties were measured as described in Example A1, but fine cellulose fibers used in these embodiment had an average fiber diameter of not more than 200 nm, preferably 1 to 200 nm, more preferably 1 to 100 nm, and even more preferably 1 to 50 nm.

(1-1) Average fiber diameter and average aspect ratio

An average fiber length was calculated from a fiber length and an aspect ratio measured by the method described above.

(1-2) Content of carboxyl groups (mmol/g)

In a 100 ml beaker, to 0.5 g by absolute dry mass of oxidized pulp, ion-exchanged water was added so that the total volume was 55 ml, followed by 5 ml of 0.01M aqueous solution of sodium chloride to obtain a pulp suspension. The pulp suspension was stirred with a stirrer until pulp was well dispersed. To this, 0.1M hydrochloric acid was added to adjust a pH to 2.5 to 3.0. The suspension was subjected to titration by injecting 0.05 M aqueous solution of sodium hydroxide at a waiting time of 60 seconds with an automated titrator (AUT-501, DKK-Toa Corporation) . A conductivity and a pH of the pulp suspension were repeatedly measured every one minute until a pH of the suspension reached to around 11. The resultant conductivity curve was used to determine a sodium hydroxide titer and calculate the content of carboxyl groups.

A natural cellulose fiber exists as a bundle of high crystalline microfibrils formed by aggregation of about 20 to 1500 cellulose molecules. Use of TEMPO oxidization in the present invention enables selective introduction of a carboxyl group to the surface of the crystalline microfibril. In practical, a carboxyl group was introduced only to the surface of cellulose crystal, but the content of carboxyl groups defined by the method of measurement above represents an average value per weight of cellulose.

(1-3) Mass percentage of fine cellulose fibers in a cellulose fiber suspension (content of fine cellulose fibers) (%)

0.1% by mass suspension of cellulose fibers was prepared and measured for solid content. The suspension was suction-filtered through a 16 μm-mesh glass filter (25G P16, SHIBATA Scientific Technology Ltd.). The filtrate was measured for solid content. The solid content of the filtrate (C1) was divided by the solid content of the suspension before filtration (C2). A value (C1/C2) was considered as the content of fine cellulose fibers (%).

(2) Peeling test with tape

A 180˚ peeling tester (PEELING TESTER, model: IPT200-5N, measuring range: 0.001 to 5.0N; IMADA, Incorporated) was used to perform a peeling test with tape by the following method.
First, a gas barrier laminate of each Examples and Comparative Examples was prepared in a size of A4 (210 x 297 mm).
Then, part (40 mm) of an adhesive tape of 15 mm in width and 140 mm in length (trade name: Cellotape; Nichiban Co., Ltd.) was folded and adhered to each other to have a rest of 100 mm of adhesive part (folded and adhered part of 20 mm in length).
The gas barrier laminate was cut to form a straight incision of 50 to 100 mm. The adhesive tape was positioned such that the end of the adhesive part was along the straight incision and tightly adhered with the adhesive part of 100 mm in length to the gas barrier laminate.
Then, the adhered region was cut into 15 mm in width and 100 in length to obtain a test sample composed of the gas barrier laminate and the adhesive tape stuck on a layer of fine cellulose fibers and integrated.
A double-faced tape of 15 mm in width and 120 mm in length (trade name : NAISTAK; Nichiban Co., Ltd.) was attached and fixed on a horizontal platform at one adhesive side. On the other adhesive side was attached a substrate side of the test sample (a substrate side of the gas barrier laminate).
Then, the held part (part of 20 mm in length) of the adhesive tape was fastened to a clip of the peeling tester, and pulled at a peeling angle (angle between the gas barrier laminate and the adhesive tape) of 165 to 180˚ and a velocity of 300 mm/min. Detachment of the layer of fine cellulose fibers from the substrate of the gas barrier laminate was evaluated according to the following criteria.
○:There was no attachment of the layer of fine cellulose fibers on the adhesive tape (no detachment of the layer of fine cellulose fibers from the substrate of the gas barrier laminate)
x: There was attachment of the layer of fine cellulose fibers on the adhesive tape (detachment of the layer of fine cellulose fibers from the substrate of the gas barrier laminate)

(3) Oxygen permeability (Equal pressure method) (X $10^{-5}$cm$^3$/m$^2$·day·Pa)

Oxygen permeability was measured under conditions of 23˚C and 0%RH with an oxygen permeability tester OX-TRAN2/21 (model ML&SL, Mocon, Inc.) in accordance with the method of JIS K7126-2, Appendix A, and more specifically, in an atmosphere of oxygen gas of 23˚C and 0% RH and nitrogen gas (carrier gas) of 23˚C and a humidity of 0%.

Preparation Example D1 <Preparation of gas barrier material 1>

> (1) A starting material, a catalyst, an oxidant, and a cooxidant for preparation of a cellulose fiber suspension were same to those described in Example A1
> (2) A procedure of preparation was the same as that described in Example A1.
> (3) Procedure of pulverizing

Then, the dropwise adding was ended after 120 minutes of oxidation to obtain oxidized pulp. The resultant oxidized pulp was sufficiently washed with ion-exchanged water and dehydrated. Then, a mixture of the oxidized pulp was adjusted to 1% by mass concentration and mixed for 120 minutes with a mixer (Vita-Mix-Blender ABSOLUTE, Osaka Chemical Co. , Ltd.) for pulverizing fibers to obtain a suspension of fine cellulose fibers (CSNF). To the suspension, isopropyl alcohol (IPA) was added in an amount of 30% by mass.
To the resultant suspension of fine cellulose fibers (CSNF), a polyamideamine-epichlorohydrin resin (PAE) (trade name: wet strength agent WS4020; Seiko PMC Corporation) was added in amounts shown in Tables D1 and D2 to 100 parts by mass of solid contents of the resultant suspension to obtain gas materials 1.

Preparation Example D2 <Preparation of gas barrier material 2>

To the suspension of fine cellulose fibers (CSNF) prepared in Preparation Example D1 isopropyl alcohol (IPA) was added in an amount of 30% by mass. To this suspension, an aqueous polyisocyanate (trade name: Duranate WB40-80D, Asahi Kasei Chemicals Corporation, or trade name: Takenate WD-723, Mitsui Chemicals, Inc.) was added in amounts shown in Tables D3 to D5 to 100 parts by mass of solid contents of the suspension to obtain gas materials 2.

Preparation Example D3 <Preparation of gas barrier material 3>

To the suspension of fine cellulose fibers (CSNF) prepared in Preparation Example D1, isopropyl alcohol (IPA) was added in an amount of 30% by mass. To this suspension, an epoxy compound (trade name: Denacol EX-811, Nagase ChemteX Corporation, trade name: Denacol EX-614B,Nagase ChemteX Corporation) was added in amounts shown in Tables D6 and D7 to 100 parts by mass of solid contents of the suspension to obtain gas materials 3.

Example D1 and Comparative Examples D1 and D2

On a platform, to a commercial PET film (trade name: Tetoron G2, Teijin DuPont Films Japan Limited, thickness of sheet: 25 $\mu$m, softening point: 250°C) as a substrate, a gas barrier material 1, prepared in Preparation Example 1, was applied with a control coater (RK Print-Coat Instruments Ltd. , Model No.: K202, application conditions: coating bar No.3, speed 5). It was heat-dried for 30 minutes at PAE concentrations and heating temperatures shown in Table D1 to obtain gas barrier laminates.

[Table D1]

| | Substrate | Thickness of gas barrier layer($\mu$m) | PAE concentration (parts by mass to 100 parts by mass of CSNF) | Heating temperature (°C) | Pelling test | Oxygen permeability ($\times 10^{-5}$cm$^3$/m$^2$·day·Pa) |
|---|---|---|---|---|---|---|
| Example D1 | PET | 1 | 0.1/0.5/1/5/10 | 80/100/120/150 | O | 0.05~0.07 |
| | | | 20 | 80/100/120/150 | | 0.57 |
| | | | 50 | 80/100/120/150 | | 1.45 |
| Camparative example D1 | PET | 1 | 0/0.01/0.02/0.05 /0.1/0.5/1/5/ 10 | 23 | $\times$ | 0.05~0.07 |
| | | | 20 | 23 | | 0.57 |
| | | | 50 | 23 | | 1.45 |
| Comparative exampleD2 | PET | 1 | 0.01/0.02/0.05 | 80/100/120 | $\times$ | 0.05~0.07 |

In Example D1, gas barrier laminates of various combinations (28 types) of PAE concentrations (0.1, 0.5, 1, 5, 10 parts by mass), 20 parts by mass of PAE concentration, and 50 parts by mass of PAE concentration with different heating (drying) temperatures (80, 100, 120, 150°C) all showed the result "O" for the peeling test and had values of oxygen permeability shown in Table D1.

In Comparative Example D1, combination of PAE concentrations (11 types) of 0 (bank), 0.01, 0.02, 0.05, 0. 1, 0.5, 1, 5 and 10, 20 parts by mass of PAE concentration, and 50 parts by mass of PAE concentration with natural drying at 23°C showed all result "x" in the peeling test and had values of oxygen permeability shown in Table D1.

In Comparative Example D2, gas barrier laminates of various combinations (9 types) of three PAE concentrations (0.01, 0.02, 0.05 parts by mass) to three heating (drying) temperatures (80, 100, 120°C) all showed the result "$\times$" for the peeling test and had values of oxygen permeability shown in Table D1.

As clearly shown in Table D1, selected combinations of a ratio of the polyamideamine-epichlorohydrin resin (PAE) to fine cellulose fibers (CSNF) with a drying temperature enable the adhesion strength to increase significantly between the substrate and the gas barrier layer, while the high oxygen gas barrier properties are maintained.

Examples D2 and D3 and Comparative Examples D3 to D5

On a platform, to a commercial nylon 6 film (trade name: Emblem ON, Unitika Ltd., thickness of sheet: 25 $\mu$m, softening point: 180°C) as a substrate, a gas barrier material 1, prepared in Preparation Example 1, was applied with a control coater (RK Print-Coat Instruments Ltd., Model No.: K202, application conditions: coating bar No. 3, speed 5) . It was heat-dried for 30 minutes at PAE concentrations and heating temperatures (a heating temperature of 23°C means natural drying treatment, applied hereinafter) shown in Table D2 to obtain gas barrier laminates.

[Table D2]

| | Substrate | Thickness of gas barrier layer(μm) | PAE concentration (parts by mass to 100 parts by mass of CSNF) | Heating temperatures (˚C) | Peeling test |
|---|---|---|---|---|---|
| Example D2 | nylon6 | 1 | 20/50 | 80/100/150 | ○ |
| Example D3 | nylon6 | 1 | 5/10 | 150 | ○ |
| Comparative example D3 | nylon6 | 1 | 0/0.1/0.5/1/5/10/20/50 | 23 | × |
| Comparative example D4 | nylon6 | 1 | 0/0.1/0.5/1 | 80/100/150 | × |
| Comparative example D5 | nylon6 | 1 | 5/10 | 80/100 | × |

In Table D2, interpretations of PAE concentration, heating temperature, and result of peeling test are same to those in Table D1. Results of the peeling test were shown about gas barrier laminates of six types for Example D2, two types for Example D3, eight types for Comparative Example D3, twelve types for Comparative Example D4, and four types for Comparative Example D5.
As clearly shown in Table D2, choice of a ratio of the polyamideamine-epichlorohydrin resin (PAE) to fine cellulose fibers (CSNF) associated with a drying temperature enables to significantly increase adhesion strength between a substrate and a gas barrier layer.

Examples D4 to D7 and Comparative Examples D6 to D10

Commercial OPP (two axis-oriented polypropylene) film (trade name: OPM-1, Mitsui Chemicals Tohcello Inc., thickness of sheet: 25 μm, softening point: 140˚C) or Commercial LLDPE (linear low density polyethylene) film (trade name: FC-D, Mitsui Chemicals Tohcello Inc., thickness of sheet: 25 μm, softening point: 105˚C) as a substrate, was placed on a platform and a gas barrier material 2, prepared in Preparation Example 2, was applied thereon with a control coater (RK Print-Coat Instruments Ltd., Model No.: K202, application conditions: coating bar No.3, speed 5). It was heat-dried for 30 minutes at aqueous polyisocyanate concentrations and heating temperatures shown in Table D3 to obtain gas barrier laminates.

[Table D3]

| | Substate | Thickness of gas barrier layer(um) | Kind of aqueous polyisocyanate | Concentration of aqueous polyisocyanate (parts by mass to 100 parts by mass of CSNF) | Heating temperature (˚C) | Peeling test |
|---|---|---|---|---|---|---|
| Examples D4 | OPP | 1 | Duranate WB40 -80D | 5/10/20/50 | 80/120 | ○ |
| Example D5 | LLDPE | 1 | Duranate WB40 -80D | 5/10 | 80/100 | ○ |
| Example D6 | OPP | 1 | Takenate WD-723 | 10 | 80/120 | ○ |
| Example D7 | LLDPE | 1 | Takenate WD-723 | 5/10 | 80/100 | ○ |
| Comparative example D6 | OPP | 1 | Duranate WB40 -80D | 0.1/1 | 80/120 | × |

(continued)

| | Substate | Thickness of gas barrier layer(um) | Kind of aqueous polyisocyanate | Concentration of aqueous polyisocyanate (parts by mass to 100 parts by mass of CSNF) | Heating temperature (˚C) | Peeling test |
|---|---|---|---|---|---|---|
| Comparative example D7 | LLDPE | 1 | Duranate WB40 -80D | 5/10 | 23 | × |
| Comparative example D8 | OPP | 1 | Duranate WB40 -80D | 0.1/1/5/10/20/50 | 23 | × |
| Comparative example D9 | OPP | 1 | Takenate WD-723 | 5 | 23 | × |
| Comparative example D10 | LLDPE | 1 | Takenate WD-723 | 5 | 23 | × |

In Table D3, interpretations of aqueous polyisocyanate concentration, heating temperature, and result of peeling test are same to those in Table D1. Results of the peeling test were shown about gas barrier laminates of eight types for Example D4, four types for Example D5, two types for Example D6, four types for Example D7, four types for Comparative Example D6, two types for Comparative Example D7, six type for Comparative Example D8, one type for Comparative Example D9, and one type for Comparative Example D10.

As clearly shown in Table D3, choice of a ratio of an aqueous polyisocyanate to fine cellulose fibers (CSNF) associated with a drying temperature enables to significantly increase adhesion strength between a substrate and a gas barrier layer.

Experimental Example

Below, Experimental Examples including examples corresponding to the other embodiments 1 to 4 are described. Experimental Examples D-A-1, D-A-2, D-B-1, and D-B-2

Commercial PET film (trade name: Tetoron G2, Teijin DuPont Films Japan Limited, thickness of sheet: 25 $\mu$m, softening point: 250˚C) as a substrate was placed on a platform and a gas barrier material 3, prepared in Preparation Example D1, was applied thereon with a control coater (RK Print-Coat Instruments Ltd., Model No.: K202, application conditions: coating bar No.3, speed 5). It was heat-dried for 30 minutes at aqueous polyisocyanate concentrations and heating temperatures shown in Table D4 to obtain gas barrier laminates.

[Table D4]

| | Substrate | Thickness of gas barrier layer (um) | Kind of aqueous polyisocyanate | Concentration of aqueous polyisocyanate (parts by mass to 100 parts by mass of CSNF) | Heating temperature (˚C) | Peeli ng test |
|---|---|---|---|---|---|---|
| Experimental example D-A-1 | PET | 1 | DuranateWB40 -80D | 01/1/5/10/20/50 | 80/120 | ○ |
| Experimental example D-A-2 | PET | 1 | TakenateWD-723 | 10 | 80/120 | ○ |
| Experimental example D-B-1 | PET | 1 | Duranate WB40 -80D | 01/1/5/10/20/50 | 23 | × |

(continued)

| | Substrate | Thickness of gas barrier layer (um) | Kind of aqueous polyisocyanate | Concentration of aqueous polyisocyanate (parts by mass to 100 parts by mass of CSNF) | Heating temperature (°C) | Peeli ng test |
|---|---|---|---|---|---|---|
| Experimental example D-B-2 | PET | 1 | Takenate WD-723 | 5/10 | 23 | × |

In Table D4, interpretations of aqueous polyisocyanate concentration, heating temperature, and result of peeling test are same to those in Table D1. Results of the peeling test were shown about gas barrier laminates of twelve types for Experimental Example D-A-1, two types for Experimental Example D-A-2, six types for Experimental Example D-B-1, and two types for Experimental Example D-B-2. Experimental Examples D-A-1 and D-A-2 correspond to the "other embodiment -1" described above.

Experimental Examples D-A-3, D-A-4, D-A-5, D-B-3, and D-B-4

Commercial nylon 6 film (trade name: Emblem ON, Unitika Ltd., thickness of sheet: 25 μm, softening point: 180°C) as a substrate was placed on a platform and a gas barrier material 2, prepared in Preparation Example D2, was applied thereon with a control coater (RK Print-Coat Instruments Ltd., Model No.: K202, application conditions: coating bar No.3, speed 5). It was heat-dried for 30 minutes at aqueous polyisocyanate concentrations and heating temperatures shown in Table D5 to obtain gas barrier laminates.

[Table D5]

| | Substrate | Thickness of gas barrier layer (um) | Kind of aqueous polyisocyanate | Concentration of aqueous polyisocyanate (parts by mass to 100 parts by mass of CSNF) | Heating temperature (°C) | Peeli ng test |
|---|---|---|---|---|---|---|
| Experimental example D-A-3 | nylon 6 | 1 | DuranateWB40-80D | 5/10/20/50 | 80/120 | ○ |
| Experimental example D-A-4 | nylon 6 | 1 | DuranateWB40-80D | 0.1/1 | 120 | ○ |
| Experimental example D-A-5 | nylon 6 | 1 | TakenateWD-723 | 10 | 80/120 | ○ |
| Experimental example D-B-3 | nylon 6 | 1 | Duranate WB40-80 | 0.1/1 | 80 | × |
| Experimental example D-B-4 | nylon 6 | 1 | TakenateWD-723 | 5/10 | 23 | × |

In Table D5, interpretations of aqueous polyisocyanate concentration, heating temperature, and result of peeling test are same to those in Table D1. Results of the peeling test were shown about gas barrier laminates of eight types for Experimental Example D-A-3, two types for Experimental Example D-A-4, two types for Experimental Example D-A-5, two types for Experimental Example D-B-3, and two types for Experimental Example D-B-4. Experimental Examples D-A-3, D-A-4, and D-A-5 correspond to the "other embodiment -2" described above.

As clearly shown in Table D5, choice of a ratio of an aqueous polyisocyanate to fine cellulose fibers (CSNF) associated with a drying temperature enables to significantly increase adhesion strength between a substrate and a gas barrier layer.

Experimental Examples D-A-6, D-A-7, D-B-5, D-B-6, and B-7

Commercial PET film (trade name: Tetoron G2, Teijin DuPont Films Japan Limited, thickness of sheet: 25 μm, softening point: 250°C) as a substrate was placed on a platform and a gas barrier material 3, prepared in Preparation Example D3, was applied thereon with a control coater (RK Print-Coat Instruments Ltd., Model No.: K202, application conditions: coating bar No.3, speed 5). It was heat-dried for 30 minutes at epoxy compound concentrations and heating temperatures shown in Table D6 to obtain gas barrier laminates.

[Table D6]

| | Substrate | Thickness of gas barrier layer (um) | Kind of epoxy compound | Epoxy compound concentration (parts by mass to 100 parts by mass of CSNF) | Heating temperature (°C) | Peeling test |
|---|---|---|---|---|---|---|
| Experimental ExampleD-A-6 | PET | 1 | DenacolEX-811 | 5/10/20/50 | 90/100/120 | ○ |
| Experimental ExampleD-A-7 | PET | 1 | DenacolEX-614B | 10 | 120 | ○ |
| ExampleD-B-5 | PET | 1 | DenacolEX-811 | 5/10 | 80 | × |
| Experimental example D-B-6 | PET | 1 | DenacolEX-811 | 50 | 23 | × |
| Experimental example D-B-7 | PET | 1 | DenacolEX-614B | 10 | 23 | × |

In Table D6, interpretations of epoxy compound concentration, heating temperature, and result of peeling test are same to those in Table D1. Results of the peeling test were shown about gas barrier laminates of twelve types for Experimental Example D-A-5, one type for Experimental Example D-A-7, two types for Experimental Example D-B-5, one type for Experimental Example D-B-6, and one type for Experimental Example D-B-7. Experimental Examples D-A-6, D-A-7, and D-B-5 correspond to the "other embodiment -3" described above.

As clearly shown in Table D6, choice of a ratio of an epoxy compound to fine cellulose fibers (CSNF) associated with a drying temperature enables to significantly increase adhesion strength between a substrate and a gas barrier layer. Experimental Example D-A-8, D-A-9, D-A-10, D-A-11, D-B-8, and D-B-9

Commercial nylon 6 film (trade name: Emblem ON, Unitika Ltd., thickness of sheet: 25 μm, softening point: 180°C) as a substrate was placed on a platform and a gas barrier material 3, prepared in Preparation Example D3, was applied thereon with a control coater (RK Print-Coat Instruments Ltd., Model No.: K202) (application conditions: coating bar No. 3, speed 5). It was heat-dried for 30 minutes at epoxy compound concentrations and heating temperatures shown in Table D6 to obtain gas barrier laminates.

[Table D7]

| | Substrate | Thickness of gas barrier layer (um) | Kind of epoxy compound | Epoxy compound concentration (parts by mass to 100 parts by mass of CSNF) | Heating temperature (˚C) | Peeling test |
|---|---|---|---|---|---|---|
| Experimental example D-A-8 | nylon6 | 1 | Denacol EX -811 | 20/50 | 90/100/110/120 | ○ |
| Experimental example D-A-9 | nylon6 | 1 | Denacol EX -811 | 5/10 | 110/120 | ○ |
| Experimental example D-A-10 | nylon6 | 1 | DenacolEX -614B | 10 | 120 | ○ |
| Experimental example D-A-11 | nylon6 | 1 | DenacolEX -811 | 50 | 23 | ○ |
| Experimental example D-B-8 | nylon6 | 1 | DenacolEX -811 | 5/10 | 80/90/100 | × |
| Experimental example D-B-9 | nylon6 | 1 | DenacolEX -614B | 10 | 23 | × |

In Table D7, interpretations of epoxy compound concentration, heating temperature, and result of peeling test are same to those in Table D1. Results of the peeling test were shown about gas barrier laminates of eight types for Experimental Example D-A-8, four types for Experimental Example D-A-9, one type for Experimental Example D-A-10, one type for Experimental Example D-A-11, six types for Experimental Example D-B-8, and one type for Experimental Example D-B-9. Experimental Examples D-A-8, D-A-9, D-A-10, D-A-11, and D-B-8 correspond to the "other embodiment -4" described above.

As clearly shown in Table D7, choice of a ratio of an epoxy compound to fine cellulose fibers (CSNF) associated with a drying temperature enables to significantly increase adhesion strength between a substrate and a gas barrier layer.

**Claims**

1.    A gas barrier material, comprising cellulose fibers having an average fiber diameter of not more than 200 nm and the content of carboxyl groups of the cellulose of from 0.1 to 2 mmol/g; wherein the gas barrier material further a cross-linking agent having a reactive functional group or the cellulose fibers are dried or heated.

2.    A gas barrier molded article, comprising a molded substrate and a layer composed of the gas barrier material according to claim 1 on the surface of the molded substrate.

3.    The gas barrier material according to claim 1, comprising the cellulose fibers having an average fiber diameter of not more than 200 nm and the cross-linking agent having a reactive functional group, wherein the content of carboxyl groups in the cellulose composing the cellulose fiber is 0.1 to 2 mmol/g.

4.    The gas barrier material according to claim 3, wherein the cellulose fibers having an average fiber diameter of not more than 200 nm have an average aspect ratio of 10 to 1,000.

5.    The gas barrier material according to claim 3 or 4, wherein the cross-linking agent having a reactive functional group is a compound having at least two functional groups and is selected from the group consisting of an epoxy, an aldehyde, an amino, a carboxyl, an isocyanate, a hydrazide, an oxazolyl, a carbodiimide, an azetidinium, an alkoxide, a methylol, a silanol and a hydroxy groups.

6. The gas barrier material according to any one of claim 3 to 5, wherein the cross-linking agent having a reactive functional group has a molecular weight of not more than 500.

7. The gas barrier material according to any one of claim 3 to 5, wherein the cross-linking agent having a reactive functional group is a compound having a molecular weight of not more than 500 and at least two groups selected from the group consisting of an aldehyde and a carboxyl groups.

8. The gas barrier material according to any one of claim 3 to 5, wherein the cross-linking agent having a reactive functional group is at least one compound selected from the group consisting of glyoxal, glutaraldehyde and citric acid.

9. A gas barrier molded article formed from the gas barrier material according to any one of claim 3 to 8.

10. A gas barrier molded article, comprising a molded substrate and a layer composed of the gas barrier material according to any one of claim 3 to 8 on the surface of the molded substrate.

11. A method for producing a gas barrier molded article or a film by a method selected from the group consisting of A5, B6, C7 and C8:

    A5: the method for producing the gas barrier molded article according to claim 9 or 10, comprising steps of supplying the gas barrier material comprising the cellulose fibers and the cross-linking agent having a reactive functional group on a hard surface for forming or a molded substrate to attach the gas barrier material on the hard surface or the molded substrate, and then drying it;
    B6: a method for producing a film, comprising steps of forming a film material of a suspension containing cellulose fibers, and then drying it with heat, wherein the cellulose fibers have an average fiber diameter of not more than 200 nm and the content of carboxyl group in the cellulose composing the cellulose fibers is 0.1 to 2 mmol/g;
    C7: a method for producing a film, comprising steps of
    forming a film material of a suspension comprising cellulose fibers on a base plate or a substrate,
    attaching an aqueous solution of a cross-linking agent having a reactive functional group on the film material, and then cross-linking it,
    wherein the cellulose fibers have an average fiber diameter of not more than 200 nm and the content of carboxyl group in the cellulose composing the cellulose fibers is 0.1 to 2 mmol/g;
    C8: a method for producing a film, comprising steps of
    forming a film material of a suspension comprising cellulose fibers on a base plate or a substrate,
    then drying it,
    attaching an aqueous solution of a cross-linking agent having a reactive functional group on the dried film material, and then cross-linking it,
    wherein the cellulose fibers have an average fiber diameter of not more than 200 nm and the content of carboxyl group in the cellulose composing the cellulose fibers is 0-1 to 2 mmol/g.

12. The method according to claim 11, which is the method for producing a gas barrier molded article according to A5, further comprising step of heating the gas barrier molded article after the step of drying.

13. The method according to claim 11, which is the method for producing a film according to B6, wherein, in the step of drying with heat, the film is dried so that the water content of the film may be 1 to 90% of the equilibrium water content at 23°C and 60%RH.

14. The method according to claim 11 or 13, which is the method for producing a film according to B6, wherein the heating temperature in the step of drying with heat is 50 to 250°C.

15. The method according to any one of claims 11, 13 and 14, which is the method for producing a film according to B6, further comprising step of holding the film material in a state dried to the equilibrium water content at a temperature of 20°C±15°C and a humidity of 45 to 85%RH between steps of forming the film material of the suspension of the cellulose fibers and drying with heat.

16. The method according to claim 11, which is the method for producing a film according to C7 or C8, wherein the concentration of the aqueous solution of the cross-linking agent in the step of attaching the aqueous solution is 1 to 30% by mass.

17. The method according to claim 11, which is the method for producing a film according to C7 or C8, wherein the cross-linking reaction is performed by heating at 30 to 300˚C for 1 to 300 minutes.

18. The method according to any one of claims 11, 16 and 17, which is the method for producing a film according to C7 or C8, wherein the cross-linking agent having a reactive functional group is a compound having at least two functional groups selected from the group consisting of an epoxy, an aldehyde, an amino, a carboxyl, an isocyanate, a hydrazide, an oxazolyl, a carbodiimide, an azetidinium, an alkoxide, a methylol, a silanol and a hydroxy groups.

19. The method according to any one of claims 11 and 16 to 18, which is the method for producing a film according to C7 or C8, wherein the cross-linking agent having a reactive functional group has a molecular weight of not more than 500.

20. The method according to any one of claims 11 and 16 to 19, which is the method for producing a film according to C7 or C8, wherein the cross-linking agent having a reactive functional group is a compound having a molecular weight of not more than 500 and at leas two groups selected from the group consisting of an aldehyde, a carboxyl and a hydrazide groups.

21. The method according to any one of claims 11 and 16 to 19, which is the method for producing a film according to C7 or C8, wherein the cross-linking agent is a compound selected from the group consisting of adipic acid dihydrazide, glyoxal, butanetetracarboxylic acid, glutaraldehyde and citric acid.

**INTERNATIONAL SEARCH REPORT**

| International application No. |
| --- |
| PCT/JP2009/071889 |

A. CLASSIFICATION OF SUBJECT MATTER
*C08L1/02*(2006.01)i, *B32B5/02*(2006.01)i, *C08J5/18*(2006.01)i, *C08J7/04*(2006.01)i, *C08K5/04*(2006.01)i, *C08K5/16*(2006.01)i, *C09D5/00*(2006.01)i, *C09D101/00*(2006.01)i, *D21H11/16*(2006.01)i
According to International Patent Classification (IPC) or to both national classification and IPC

B. FIELDS SEARCHED

Minimum documentation searched (classification system followed by classification symbols)
C08L1/02, B32B5/02, C08J5/18, C08J7/04, C08K5/04, C08K5/16, C09D5/00, C09D101/00, D21H11/16

Documentation searched other than minimum documentation to the extent that such documents are included in the fields searched
Jitsuyo Shinan Koho      1922–1996   Jitsuyo Shinan Toroku Koho   1996–2010
Kokai Jitsuyo Shinan Koho   1971–2010   Toroku Jitsuyo Shinan Koho   1994–2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2008-001728 A  (Asahi Kasei Corp.),<br>10 January 2008 (10.01.2008),<br>claims; examples<br>(Family: none) | 11,13-15<br>1-10,12,<br>16-21 |
| A | WO 2007/088974 A1  (Kyushu University),<br>09 August 2007 (09.08.2007),<br>claims; examples<br>(Family: none) | 1-21 |
| A | JP 2008-242154 A  (Kyoto University),<br>09 October 2008 (09.10.2008),<br>claims; examples<br>& EP 2130672 A        & WO 2008/117848 A1 | 1-21 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>19 February, 2010 (19.02.10) | Date of mailing of the international search report<br>02 March, 2010 (02.03.10) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/071889 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-060680 A  (Kyoto University),<br>10 March 2005 (10.03.2005),<br>claims; entire text<br>& US 2006/0182941 A1     & US 2009/0123726 A<br>& EP 1650253 A1          & WO 2005/012404 A1<br>& KR 10-2006-0052961 A   & CN 1832985 A | 1-21 |
| A | JP 2000-503703 A  (Rhodia Chimie),<br>28 March 2000 (28.03.2000),<br>claims; entire text<br>& US 2001/0011516 A1     & US 6231657 B1<br>& US 6348436 B1          & EP 912633 A<br>& EP 912653 A            & WO 1998/002486 A1<br>& WO 1998/002499 A1      & DE 69704360 T<br>& DE 69704360 D          & DE 69708294 D<br>& DE 69708294 T          & FR 2750994 A<br>& FR 2753995 A           & FR 2750994 A1<br>& AT 199924 T | 1-21 |
| E,A | JP 2010-037348 A  (Dai-Ichi Kogyo Seiyaku Co.,<br>Ltd.),<br>18 February 2010 (18.02.2010),<br>claims; entire text<br>(Family: none) | 1-21 |
| P,A | JP 2009-041117 A  (Nisshinbo Industries, Inc.),<br>26 February 2009 (26.02.2009),<br>claims; entire text<br>(Family: none) | 1-21 |

Form PCT/ISA/210 (continuation of second sheet) (April 2007)

| INTERNATIONAL SEARCH REPORT | International application No. |
|---|---|
| | PCT/JP2009/071889 |

Claims 1, 2
 It is unclear as to what the expression "the average fiber diameter contains 200 nm or less" recited in claim 1 means technically.
 Therefore, claim 1 does not comply with the requirement of clarity under PCT Article 6. Similar comments apply to claim 2 which refers to claim 1.


Claims 1, 2
 It is unclear as to what the term "material" recited in claim 1 means. The expression "a material which ··· ··· and additionally comprises a cross-linking agent" appears to mean a material that is not molded into a molded article yet. However, it is considered that the expression "a gas-barrier material produced by drying or heating cellulose fibers ··· ···" means that the material is a molded article, which is a different material from the material expressed in the former expression.
 Therefore, claim 1 does not comply with the requirement of clarity under PCT Article 6. Similar comments apply to claim 2 which refers to claim 1.


Claims 1, 2
 The "gas-barrier material" recited in claim 1 includes, within the scope of the embodiments thereof, a material which "comprises cellulose fibers each containing an average fiber diameter of 200 nm or less, having a carboxyl group content of 0.1 to 2 mmol/g and ···, and which is produced by drying the cellulose fibers".
 However, when working examples described in the description of the present application are examined, only a film-like molded article produced by a drying process not simply by drying but by heating is described as a material that can be used for gas barrier purposes (see table B1). Thus, it cannot be considered that all of the embodiments of the gas-barrier material according to claim 1 are disclosed in the meaning within PCT Article 5 or satisfactorily supported in the meaning within PCT Article 6.
 It should be noted that inventions which are not supported by the description satisfactorily and are not clearly and satisfactorily disclosed in the description as stated above were not searched.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002348522 A
- JP 2008001728 A
- JP 2009057552 A
- JP 2000019678 A
- JP 2000272254 A
- JP 2002060455 A
- JP 2005213411 A
- JP 2005272590 A
- JP 2005336644 A
- JP 2005219422 A
- JP 2008266415 A
- JP 2009203351 A
- JP 7026026 A
- JP 10088089 A

**Non-patent literature cited in the description**

- Bio MACROMOLECULES. American Chemical Society, June 2006, vol. 7
- **M. DOI ; D. F. EDWARDS.** The Theory of Polymer Dynamics. CLARENDON PRESS, 1986, 312